# EUROPEAN PATENT SPECIFICATION

(11) **EP 4 318 223 B1**
(45) Date of publication and mention of the grant of the patent: **02.04.2025**
(21) Application number: 23182952.4
(22) Date of filing: 03.07.2023
(51) Int. Cl.: G06F 9/30

(54) **8-BIT FLOATING POINT COMPARISON INSTRUCTIONS**
8-BIT-GLEITKOMMAVERGLEICHSANWEISUNGEN
INSTRUCTIONS DE COMPARAISON À VIRGULE FLOTTANTE À 8 BITS

(30) Priority: 03.08.2022 IN 202241044440; 01.10.2022 US 202217958367
(43) Date of publication of application: 07.02.2024
(73) Proprietor: Intel Corporation, Santa Clara, CA 95054 (US)
(72) Inventor: Heinecke, Alexander, San Jose, CA 95134 (US); Adelman, Menachem, 7179034 Modi'in (IL); Georganas, Evangelos, San Jose, CA 95129 (US); Hughes, Christopher, Santa Clara, CA 95051 (US); Mellempudi, Naveen, 560035 Bangalore KA (IN); Rubanovich, Simon, 34792 Haifa HA (IL); Sherman, Uri, 25213 Bustan Hagali (IL); Sperber, Zeev, 3092832 Zichron Yackov (IL); Gradstein, Amit, 3052316 Binyamina HA (IL)
(74) Representative: Samson & Partner Patentanwälte mbB

(56) References cited:
- US-A- 6 085 208
- US-A1- 2014 208 079
- LEE JINSU ET AL: "7.7 LNPU: A 25.3TFLOPS/W Sparse Deep-Neural-Network Learning Processor with Fine-Grained Mixed Precision of FP8-FP16", 2019 IEEE INTERNATIONAL SOLID- STATE CIRCUITS CONFERENCE - (ISSCC), IEEE, 17 February 2019 (2019-02-17), pages 142 - 144, XP033527819, DOI: 10.1109/ISSCC.2019.8662302

## Description

### BACKGROUND

In recent years fused-multiply-add (FMA) units with lower-precision multiplications and higher-precision accumulation have proven useful in machine learning/artificial intelligence applications, most notably in training deep neural networks due to their extreme computational intensity. Compared to classical IEEE-754 32-bit (FP32) and 64-bit (FP64) arithmetic, this reduced precision arithmetic can naturally be sped up disproportional to their shortened width.

US 6,085,208 relates to an add/subtract pipeline within a floating point arithmetic unit. For example, an optimized multimedia execution unit performs vectored floating point and integer instructions. The execution unit includes an add/subtract pipeline having far and close data paths. The far data path handles effective addition operations, as well as effective subtraction operations for operands having an absolute exponent difference greater than one. The close data path, conversely, handles effective subtraction operations for operands having an absolute exponent difference less than or equal to one.

### SUMMARY

The present invention is defined in the independent claims. The dependent claims define embodiments thereof.

### BRIEF DESCRIPTION OF DRAWINGS

Various embodiments in accordance with the present disclosure will be described with reference to the drawings, in which:
**FIG. 1** illustrates different floating point representation formats.
**FIG. 2** illustrates an exemplary execution of an instruction to determine a maximum value between FP8 data elements of corresponding data element positions of two sources.
**FIG. 3** illustrates an embodiment of method performed by a processor to process an instruction to determine a maximum value between FP8 data elements of corresponding data element positions of two sources.
**FIG. 4** illustrates more detailed embodiments of an execution of an instruction to determine a maximum value between FP8 data elements of corresponding data element positions of two sources.
**FIGS. 5(A)****-(B)** illustrate example embodiments of pseudocode representing the execution and format of an instruction to determine a maximum value between FP8 data elements of corresponding data element positions of two sources instruction.
**FIG. 6** illustrates an exemplary execution of an instruction to determine a minimum value between FP8 data elements of corresponding data element positions of two sources.
**FIG. 7** illustrates an embodiment of method performed by a processor to process an instruction to determine a minimum value between FP8 data elements of corresponding data element positions of two sources.
**FIG. 8** illustrates more detailed embodiments of an execution of an instruction to determine a minimum value between FP8 data elements of corresponding data element positions of two sources.
**FIGS. 9(A)****-(B)** illustrate example embodiments of pseudo code representing the execution and format of an instruction to determine a minimum value between FP8 data elements of corresponding data element positions of two sources instruction.
**FIG. 10** illustrates an exemplary execution of an instruction to compare values between FP8 data elements of corresponding data element positions of two sources according to a comparison operator.
**FIG. 11** provides examples of comparison operators according to some embodiments.
**FIG. 12** illustrates an embodiment of method performed by a processor to process an instruction to compare values between FP8 data elements of corresponding data element positions of two sources according to a comparison operator.
**FIGS. 13(A)****-(B)** illustrates example embodiments of pseudo code representing the execution and format of an instruction to compare values between FP8 data elements of corresponding data element positions of two sources according to a comparison operator.
**FIG. 14** illustrates an exemplary execution of an instruction to compare FP8 values in a particular data element position of a first source operand and second source operand and sets a zero flag, parity flag, and a carry flag according to a result of the comparison.
**FIG. 15** illustrates an embodiment of method performed by a processor to process an instruction to compare FP8 values in a particular data element position of a first source operand and second source operand and sets a zero flag, parity flag, and a carry flag according to a result of the comparison.
**FIGS. 16(A)****-(B)** illustrate example F (embodiments of pseudo code representing the execution and format of an instruction to compare FP8 values in a particular data element position of a first source operand and second source operand and sets a zero flag, parity flag, and a carry flag according to a result of the comparison.
**FIG. 17** illustrates embodiments of hardware to process an instruction such as any of the FP8 compare instructions detailed above.
FIG. 18 illustrates an example computing system.
FIG. 19 illustrates a block diagram of an example processor and/or System on a Chip (SoC) that may have one or more cores and an integrated memory controller.
FIG. 20(A) is a block diagram illustrating both an example in-order pipeline and an example register renaming, out-of-order issue/execution pipeline according to examples.
FIG. 20(B) is a block diagram illustrating both an example in-order architecture core and an example register renaming, out-of-order issue/execution architecture core to be included in a processor according to examples.
FIG. 21 illustrates examples of execution unit(s) circuitry.
FIG. 22 is a block diagram of a register architecture according to some examples.
FIG. 23 illustrates examples of an instruction format.
FIG. 24 illustrates examples of an addressing information field.
FIG. 25 illustrates examples of a first prefix.
FIGS. 26(A)-(D) illustrate examples of how the R, X, and B fields of the first prefix in FIG. 25 are used.
FIGS. 27(A)-(B) illustrate examples of a second prefix.
FIG. 28 illustrates examples of a third prefix.
FIG. 29 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for supporting comparison operations FP8 data elements instructions.

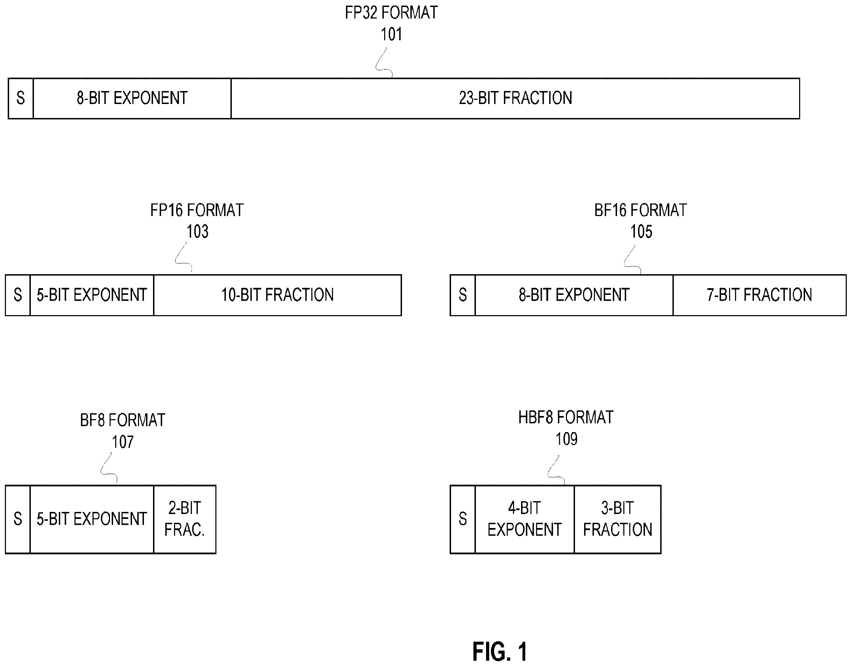

FP8 is gaining traction due to its ability to work well in machine learning algorithms, in particular deep learning training. FIG. 1 illustrates different floating point representation formats. In this illustration, the formats are in little endian format, however, in some embodiments, a big endian format is used. The FP32 format 101 has a sign bit (S), an 8-bit exponent, and a 23-bit fraction (a 24-bit mantissa that uses an implicit bit). The FP16 format 103 has a sign bit (S), a 5-bit exponent, and a 10-bit fraction. The BF16 format 105 has a sign bit (S), an 8-bit exponent, and a 7-bit fraction.

In contrast to the IEEE 754-standardized 16-bit (FP16) variant, BF16 does not compromise on range when being compared to FP32. FP32 numbers have 8 bits of exponent and 24 bits of mantissa (including the one implicit). BF16 cuts 16 bits from the 24-bit FP32 mantissa to create a 16-bit floating point datatype. In contrast FP16, roughly halves the FP32 mantissa to 10 explicit bits and reduces the exponent to 5 bits to fit the 16-bit datatype envelope.

Although BF16 offers less precision than FP16, it is typically better suited to support deep learning tasks. FP16's range is not enough to accomplish deep learning training out-of-the-box due to its limited range. BF16 does not suffer from this issue and the limited precision may actually help to generalize the learned weights in the neural net training task. In other words, lower precision can be seen as offering a built-in regularization property.

In some examples, an 8-bit floating point format (FP8) provides some advantages over a larger floating point format. For example, an 8-bit floating point format may reduce pressure on memory and bandwidth used for machine learning (such as weights, activations, and gradient values used for training and/or inference of neural networks). As shown, the IEEE and BF16 formats have a fixed number of bits allocated to the fraction (or mantissa which is the fraction bits + 1 bit) and exponent fields. Additionally, in some examples, a fixed exponent bias may be provided for a FP16 or BF16 number. As eight bits allows for a small number of mantissa and exponent bits than FP16 or BF16 it may be advantageous to have some variance in FP8 formats (e.g., ensure high accuracy and convergence when training machine learning models).

In machine learning, different parameters, namely weights, gradients and activations, have different precision and range requirements to achieve high training accuracy and/or convergence. This allows for different allocations of the number of exponent and fraction (mantissa bits) depending on the parameter being represented.

An example FP8 format is shown in 107. In some examples, this is called a bfloat8-bit floating point (BF8) format. As shown, this format uses 1 bit for a sign, 5 bits for the exponent, and 2 bits for the fraction (or 1 + 2 bits for the mantissa). An example FP8 format is shown in 109. In some examples, this is called a hybrid8-bit floating point (HF8) format. As shown, this format uses 1 bit for a sign, 4 bits for the exponent, and 3 bits for the fraction (or 1 + 3 bits for the mantissa).

Normalized numbers, subnormal (denormal) numbers, and zeroes are supported in both FP8 formats. In some examples, infinity and not-a-number (NaN) encodings are not supported, however, in some examples one or more are. In examples where infinities are not supported, a maximum exponent value is not reserved for encoding NaN and +/infinity and just used to represent normalized floating-point numbers.

In examples where infinities and NaN are supported, these are mapped to 0x80. In some examples, for a NaN on an overflow, the value may be upconverted to IEEE754 NaN. In some examples, infinities and NaN raise exceptions for a hardware status register to delineate NaN from overflow.

In some examples, a zero is represented by an encoding with all zeroes the exponent and the fraction. Encodings with an all zero exponent and non-zero fraction represent denormal numbers. In the HF8 format, an exponent = 0000₂ and mantissa = 000₂ represents numerical value of zero, while exponent = 0000₂ and mantissa = 001₂, 010₂, 011₂, 100₂, 101₂, 110₂, and 111₂ represent the denormal numbers. Similarly, in the BF8 format an exponent = 00000₂ and mantissa = 00₂ represents numerical value of zero, while exponent = 00000₂ and mantissa =01₂, 10₂, and 11₂ represent the denormal numbers.

In some examples, the FP8 formats utilize a variable exponential bias (e.g., a 6-bit unsigned integer value used as a bias). A bias skews the range of representable values more on the smaller numeric values at the expense of larger numerical values. In these examples, a numerical value of a normalized floating point number is (1)*^{sign} x* 2*^{exponent-bias} x* 1. *mantissa* and the numerical value of a denormal floating point number is (1)*^{sign} x* 2*^{exponent-bias} x* 0. *mantissa.* In some examples, the bias is provided by one or more packed data registers (e.g., SIMD or vector) where each data element position of the one or more packed data registers is to provides a bias value for a corresponding data element position of a source and/or destination. In some examples, the bias is provided by one or more general purpose registers where each general purpose register provides a bias to be used for each data element of a particular source and/or destination. Note that in some examples, a single general purpose register is used for a plurality of sources and/or destination. In some examples, the maximum bias is 16 for BF8 and 8 for HF8.

In some examples, not-a-number (NANs) and infinities are defined similarly to other IEEE floating points format, using an all-ones exponents. However, it is also acceptable in some examples to define versions of instructions that support other formats where "negative zero" is used to denote NANs and infinities, and the all-ones exponent is used to encode normal floating point numbers.

In some examples, hardware support for FP8 supports one or more status (condition code) flags: invalid, denormal, overflow, and underflow. An arithmetic operation with a denormal operand will set the denormal exception flag, while an arithmetic operation with any NaN operand or no useful definable result will set the invalid exception flag. An arithmetic operation with a result that that overflows or underflows a destination will set the overflow and underflow exception flags respectively in some examples.

Recent work has also shown that 8-bit float point formats, such as BF8 (using a 1-5-2 format (1-bit sign, 5-bit exponent, and 2-bit fraction or a 1-4-3 format), are a viable option for input data for mixed precision computation such as fused multiply-add (FMA) with BF8 inputs and a FP32 accumulator. To prepare higher-precision outputs to be used as the next operation's inputs, in some embodiments, those outputs need to be converted/rounded to FP8 numbers. Using 8-bit floating-point format instead of single- precision in at least some matrix operations is expected to alleviate memory utilization and bandwidth issues while providing a non-trivial performance upside (e.g., on the order of 2X) even during the compute operation. Additionally, numerical accuracy studies have shown that the precision of the Deep Learning application is not compromised. However, extensive workload studies have shown, that from time to time its required to avoid classic round-to-nearest behavior during these down converts. Instead, a stochastic rounding operation is needed. Examples herein relate to conversion using a provided bias term, including variable in-place, 2^{nd} source merging and/or saturating.

Current experiments show bandwidth issues on the various cache levels and DRAM. So, as matrix compute capabilities speed up significantly (2X), the memory sub-systems capabilities only increase modestly due to reduce memory footprint. However, it has been found important to achieve convergence that FMAs accumulate into single-precision, IEEE float32. That means it may be important down-convert a result to FP8 after the operation completes.

In some examples, BF8-based operations support round to nearest even (RNE) and stochastic rounding. In some examples, HF8-based operations support round to nearest even (RNE) and stochastic rounding. In some examples, hybrid operations using both HF8 and BF8 are supported.

Detailed herein are embodiments of instructions, and their support, that operate on FP8 source data elements using comparisons.

In some embodiments, one or both of the instruction are defined such as their execution is to treat denormal inputs or outputs as zeros, support any rounding mode, and/or report or suppress floating point numerical flags.

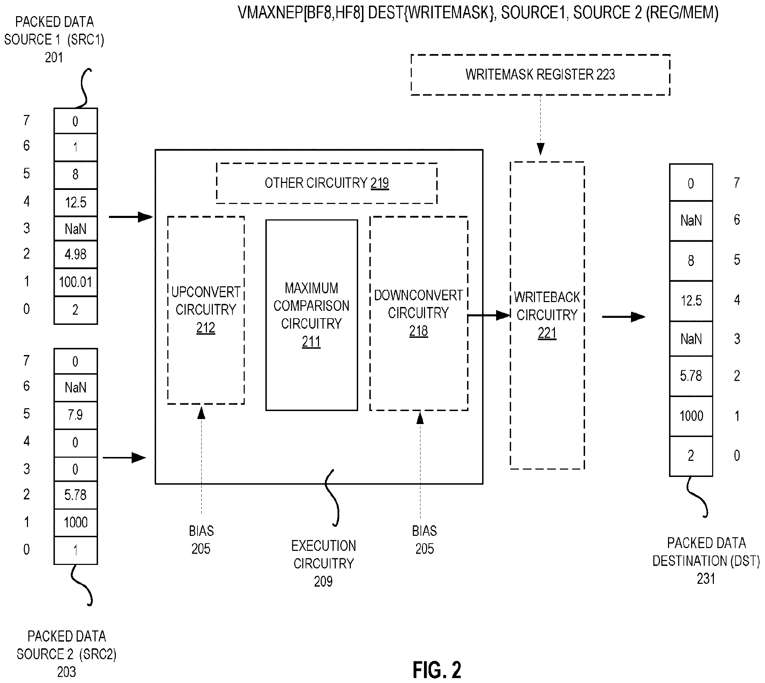

**FIG. 2** illustrates an exemplary execution of an instruction to determine a maximum value between FP8 data elements of corresponding data element positions of two sources. While this illustration is in little endian format, the principles discussed herein work in big endian format. The maximum value between FP8 data elements of corresponding data element positions of two sources instruction (shown here with an exemplary opcode mnemonic of VMAXNEP[BF8,HF8]) includes one or more fields to define the opcode for the instruction, one or more fields to reference or indicate two packed data sources (e.g., a register or memory location), and/or one or more fields to reference or indicate a packed data destination (e.g., a register or memory location). In some embodiments, the instruction also includes one or more fields to reference or indicate a writemask or predication register that is to store writemask or predicate values as described later. Note that BF8 or HF8 indicate the FP8 format used.

An embodiment of a format for an instruction to determine a maximum value between FP8 data elements of corresponding data element positions of two sources is VMAXNEP[BF8,HF8] DST{k}, SRC1, SRC2. In some embodiments, VMAXNEP[BF8,HF8]is the opcode mnemonic of the instruction. DST is a field for the destination operand identifier, such as packed data register or memory. SRC1 and SRC2 are fields for the source operands identifiers, such as packed data registers and/or memory. In some examples, the opcode is provided by at least field 2303, DST field is provided by field 2444, the first source is provided by bits VVVV of one of 2705, BPJ17, or 2817, and the second source is provided by at least 2446. In some examples, the opcode is provided by at least field 2303, DST field is provided by at least field 2444, the first source is provided by bits VVVV of one of 2705, BPJ17, or 2817, and the second source is a memory location provided by at least 2446 and/or the SIB byte 2404.The source operands and destination operand may come in one or more sizes such as 128-bit, 256-bit, 512-bit, etc. The {k} is used when writemasking or predication is used.

In this example, the packed data sources 201 and 203 include 8 packed FP8 data elements each of which is in FP8 format. At least one of the packed data sources 201 and 203 may be a register or a memory location. For memory operands, in some embodiments, either the numbers of bytes (e.g., 1) at the specified address corresponding to the length of the chosen vector register size is/are loaded from memory or a scalar value at the specified address is loaded from memory and broadcasted to all entries of the vector register using broadcast circuitry.

The packed data sources 201 and 203 are fed into execution circuitry 209 to be operated on. In particular, execution circuitry 209 determines which data element from corresponding data element positions of the packed data sources 201 and 203 has a maximum value using maximum comparison circuitry 211. In some embodiments, the data elements are signed. In other embodiments, the data elements are unsigned. In some embodiments, when the values being compared are both 0.0s (of either sign), the value in the second source operand is returned. If a value in the second source operand is an SNaN, then SNaN is forwarded unchanged to the destination (that is, a QNaN version of the SNaN is not returned). In some embodiments, when only one value is a NaN (SNaN or QNaN) for this instruction, the second source operand value, either a NaN or a valid floating-point value, is written to the result.

In some examples, FP8 values are upconverted using upconvert circuitry 212. In some examples, a (variable or static) bias 205 is applied during the upconversion. In some examples, the upconversion is to FP16. In some examples, the upconversion is to BF16. In some examples, the upconversion is to FP32.

In some examples, results of the operation are downconvered using downconvert circuitry 218. In some examples, a bias (variable or static) 205 is applied during the downconversion. In some examples, the downconversion is from FP16. In some examples, the downconversion is from BF16. In some examples, the downconversion is from FP32. In other examples, when FP8 is natively supported,no downconversion is performed.

In some examples, the execution circuitry 209 is configured according to control information to use one or more of the described components instead of other execution circuits 219. The control information may be provided by a decoder, scheduler, etc.

In some embodiments, this execution of the instruction uses a round to nearest (even) rounding mode. In some embodiments, output denormals are always flushed to zero and input denormals are always treated as zero.

The packed data destination 231 is written to store the determined maximum value in a corresponding packed data element of the packed data sources 201 and 203. In some embodiments, when the instruction calls for the use of predication or writemasking, a writemask (or predicate) register 231 dictates how the resultant FP8 maximum values are stored and/or zeroed using the writemask circuitry 221.

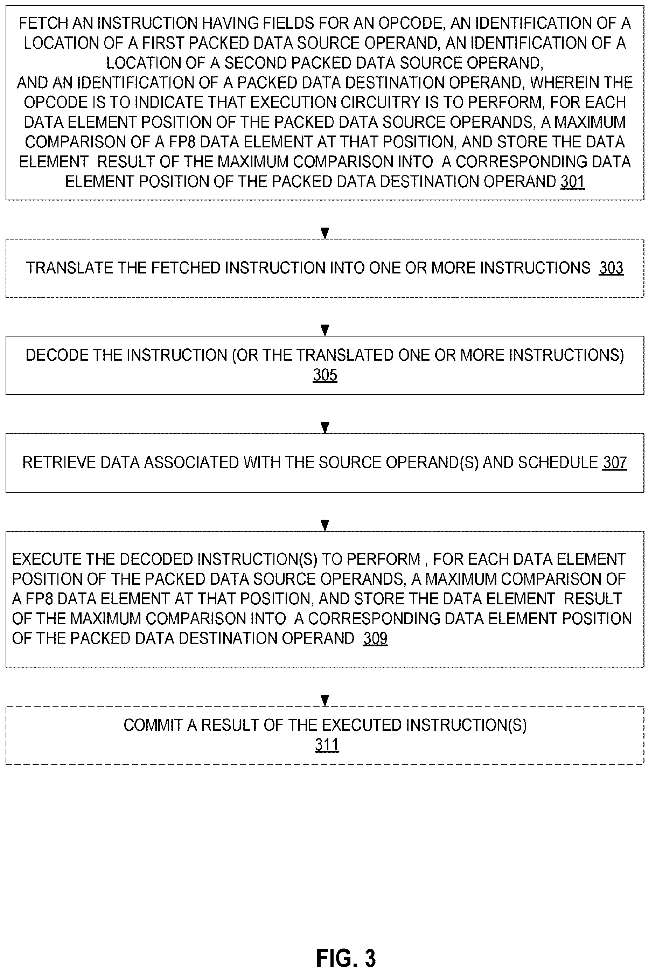

**FIG. 3** illustrates an embodiment of method performed process an instruction to determine a maximum value between FP8 data elements of corresponding data element positions of two sources. For example, a processor core as shown herein, a pipeline as detailed below, etc. performs this method.

At 301 an instruction is fetched having fields for an opcode, an identification of a location of a first packed data source operand, an identification of a location of a second packed data source operand, and an identification of a packed data destination operand, wherein the opcode is to indicate that execution circuitry is to perform, for each data element position of the packed data source operands, a maximum comparison of a FP8 data element at that position, and store the data element result of the maximum comparison into a corresponding data element position of the packed data destination operand. Note the data elements are in a FP8 format.

In some embodiments, the fetched instruction, of a first ISA, is translated into one or more instructions of a second, different ISA at 303. The one or more instructions of the second, different ISA, when executed, provided the same result as if the fetched instruction had been executed. Note the translation may be performed by hardware, software, or a combination thereof.

The instruction (or the translated one or more instructions) is/are decoded 305. This decoding may cause the generation of one or more micro-operations to be performed. Note that as this instruction

Data values associated with the source operand of the decoded instruction are retrieved at 307. For example, when a source operand is stored in memory, the data from the indicated memory location is retrieved.

At 309, the decoded instruction(s) is/are executed by execution circuitry (hardware) such as that detailed herein. The execution circuitry is to perform, for each data element position of the packed data source operands, a maximum comparison of a FP8 data element at that position, and store the data element result of the maximum comparison into a corresponding data element position of the packed data destination operand. In some embodiments a writemask is used to determine what should be stored in the destination operand. In some examples, the data elements are upscaled (e.g., to BF16, FP16, FP32, etc.) prior to the comparison operation. In some examples, results are downscaled prior to storage. Note upscaling, etc. may use a variable bias.

In some embodiments, the instruction is committed or retired at 311.

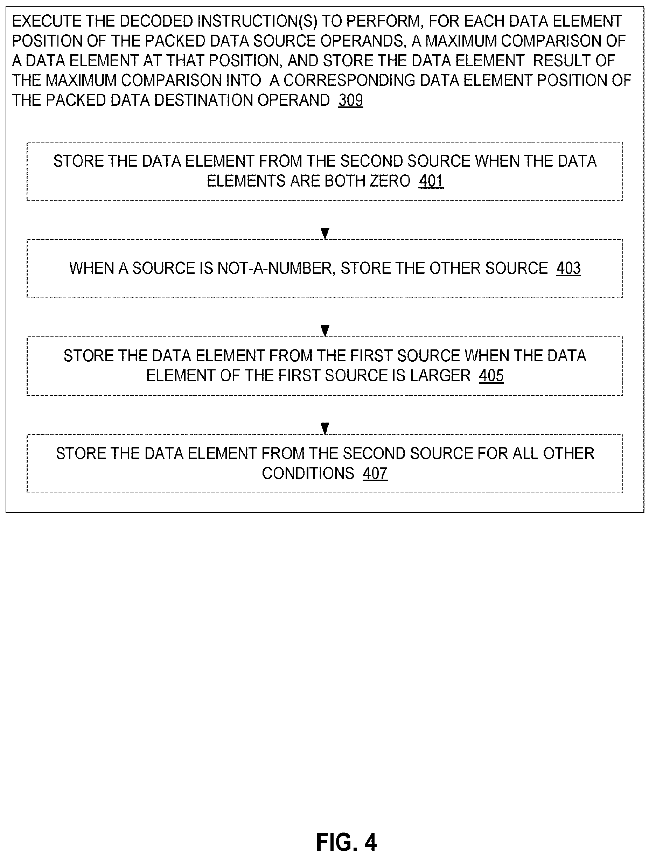

FIG. 4 illustrates more detailed embodiments of an execution of an instruction to determine a maximum value between FP8 data elements of corresponding data element positions of two sources. For example, in some embodiments, this figure illustrates operation 309 of FIG. 3.

The data element from the second source is stored when the data elements are both zero at 401.

When a source is not-a-number, store the other source at 403.

The data element from the first source is stored when the data element of the first source is larger at 405.

The data element from the second source is stored for all other conditions at 407.

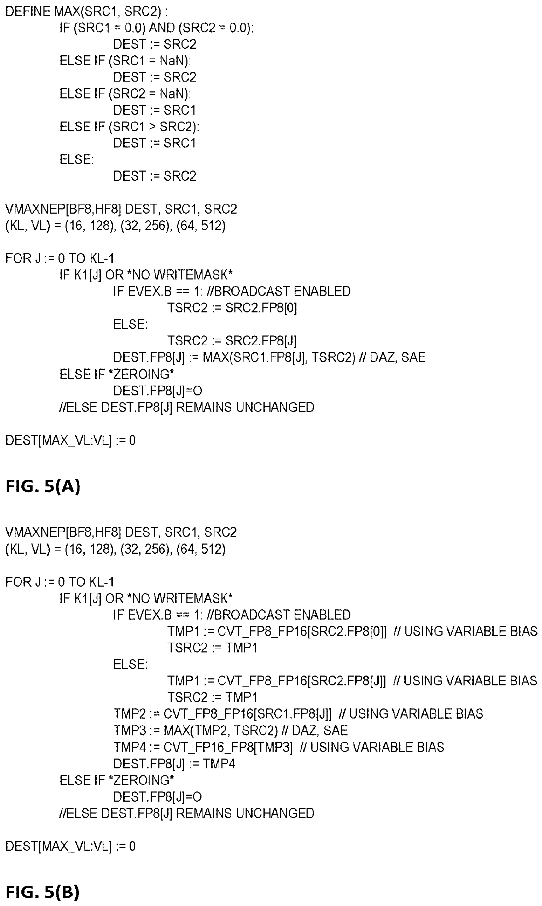

FIGS. 5(A)-(B) illustrates examples of pseudocode representing the execution and format of an instruction to determine a maximum value between FP8 data elements of corresponding data element positions of two sources instruction. Note that EVEX.b maps to the b of prefix 2301(C). The comment of DAZ, FTZ, RNE, and SAE refer to the use of support for flush-to-zero (FTZ), denormals-are-zero (DAZ), suppress all exceptions (SAE), and round-to-even (RNE) rounding.

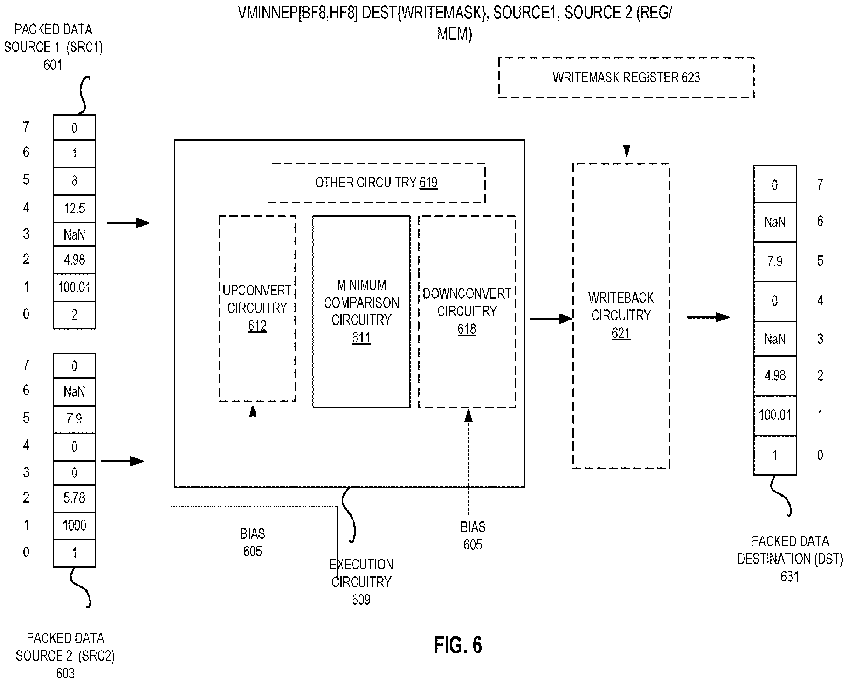

**FIG. 6** illustrates an exemplary execution of an instruction to determine a minimum value between FP8 data elements of corresponding data element positions of two sources. While this illustration is in little endian format, the principles discussed herein work in big endian format. The minimum value between FP8 data elements of corresponding data element positions of two sources instruction (shown here with an exemplary opcode mnemonic of VMAXNEP[BF8, HF8]) includes one or more fields to define the opcode for the instruction, one or more fields to reference or indicate two packed data sources (e.g., a register or memory location), and/or one or more fields to reference or indicate a packed data destination (e.g., a register or memory location). In some embodiments, the instruction also includes one or more fields to reference or indicate a writemask or predication register that is to store writemask or predicate values as described later. Note that HF8 and BF8 indicate the FP8 format used.

An embodiment of a format for an instruction to determine a minimum value between FP8 data elements of corresponding data element positions of two sources is VMAXNEP[BF8, HF8] DST{k}, SRC1, SRC2. In some embodiments, VMAXNEP[BF8, HF8] is the opcode mnemonic of the instruction. DST is a field for the destination operand identifier, such as packed data register or memory. SRC1 and SRC2 are fields for the source operands identifiers, such as packed data registers and/or memory. In some examples, the opcode is provided by at least field 2303, DST field is provided by field 2444, the first source is provided by bits VVVV of one of 2705, BPJ17, or 2817, and the second source is provided by 2446. In some examples, the opcode is provided by at least field 2303, DST field is provided by field 2444, the first source is provided by bits VVVV of one of 2705, BPJ17, or 2817, and the second source is a memory location provided by 2446 and/or the SIB byte 2404. The source operands and destination operand may come in one or more sizes such as 128-bit, 256-bit, 512-bit, etc. The {k} is used when writemasking or predication is used. Note that BF8 and HF8 indicate the type of FP8 format used.

In this example, the packed data sources 601 and 603 include 8 packed FP8 data elements each of which is in FP8 format. At least one of the packed data sources 601 and 603 may be a register or a memory location. For memory operands, in some embodiments, either the numbers of bytes (e.g., 1) at the specified address corresponding to the length of the chosen vector register size ia/are loaded from memory or a scalar value at the specified address is loaded from memory and broadcasted to all entries of the vector register.

The packed data sources 601 and 603 are fed into execution circuitry 609 to be operated on. In particular, execution circuitry 609 determines which data element from corresponding data element positions of the packed data sources 601 and 603 has a minimum value using minimum comparison circuitry 611. In some embodiments, the data elements are signed. In other embodiments, the data elements are unsigned. In some embodiments, when the values being compared are both 0.0s (of either sign), the value in the second source operand is returned. If a value in the second source operand is an SNaN, then SNaN is forwarded unchanged to the destination (that is, a QNaN version of the SNaN is not returned). In some embodiments, when only one value is a NaN (SNaN or QNaN) for this instruction, the second source operand value, either a NaN or a valid floating-point value, is written to the result.

In some examples, FP8 values are upconverted using upconvert circuitry 612. In some examples, a (variable or static) bias 605 is applied during the upconversion. In some examples, the upconversion is to FP16. In some examples, the upconversion is to BF16. In some examples, the upconversion is to FP32.

In some examples, results of the operation are downconvered using downconvert circuitry 618. In some examples, a bias (variable or static) 605 is applied during the downconversion. In some examples, the downconversion is from FP16. In some examples, the downconversion is from BF16. In some examples, the downconversion is from FP32. In other examples, when FP8 is natively supported,no downconversion is performed.

In some examples, the execution circuitry 609 is configured according to control information to use one or more of the described components instead of other execution circuits 619. The control information may be provided by a decoder, scheduler, etc.

In some embodiments, this execution of the instruction uses a round to nearest (even) rounding mode. In some embodiments, output denormals are always flushed to zero and input denormals are always treated as zero.

The packed data destination 631 is written to store the determined minimum value in a corresponding packed data element of the packed data sources 601 and 603. In some embodiments, when the instruction calls for the use of predication or writemasking, a writemask (or predicate) register 631 dictates how the resultant FP8 minimum values are stored and/or zeroed using the writemask circuitry 621.

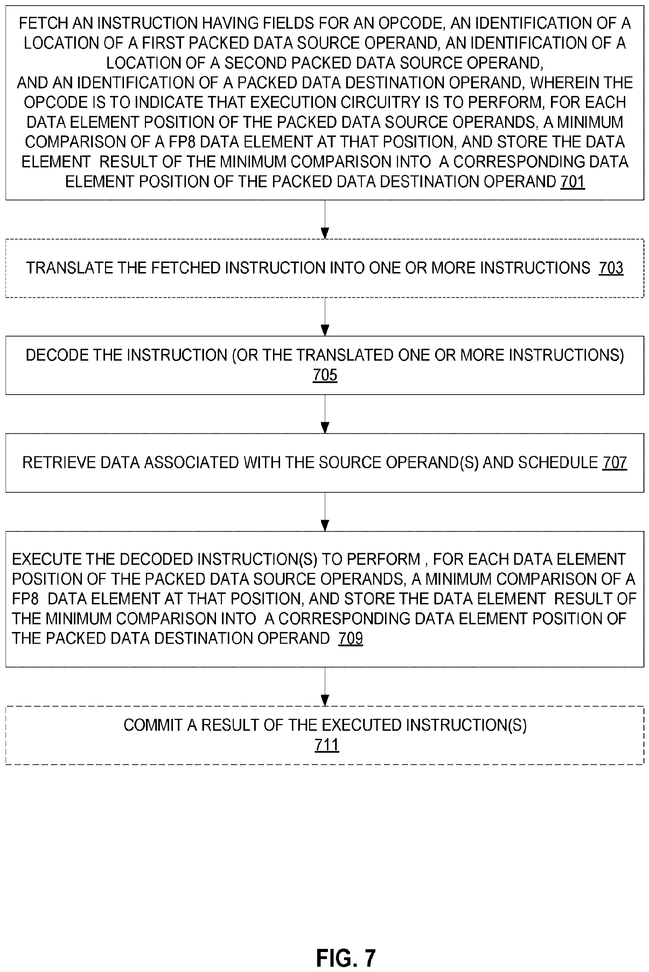

**FIG. 7** illustrates an embodiment of method performed by a processor to process an instruction to determine a minimum value between FP8 data elements of corresponding data element positions of two sources. For example, a processor core as shown herein, a pipeline as detailed below, etc. performs this method.

At 701 an instruction is fetched having fields for an opcode, an identification of a location of a first packed data source operand, an identification of a location of a second packed data source operand, and an identification of a packed data destination operand, wherein the opcode is to indicate that execution circuitry is to perform, for each data element position of the packed data source operands, a minimum comparison of a FP8 data element at that position, and store the data element result of the minimum comparison into a corresponding data element position of the packed data destination operand. Note the data elements are in a FP8 format.

In some embodiments, the fetched instruction, of a first ISA, is translated into one or more instructions of a second, different ISA at 703. The one or more instructions of the second, different ISA, when executed, provided the same result as if the fetched instruction had been executed. Note the translation may be performed by hardware, software, or a combination thereof.

The instruction (or the translated one or more instructions) is/are decoded 705. This decoding may cause the generation of one or more micro-operations to be performed. Note that as this instruction

Data values associated with the source operand of the decoded instruction are retrieved at 707. For example, when a source operand is stored in memory, the data from the indicated memory location is retrieved.

At 709, the decoded instruction(s) is/are executed by execution circuitry (hardware) such as that detailed herein. The execution circuitry is to perform, for each data element position of the packed data source operands, a minimum comparison of a FP8 data element at that position, and store the data element result of the minimum comparison into a corresponding data element position of the packed data destination operand. In some embodiments a writemask is used to determine what should be stored in the destination operand. In some examples, the data elements are upscaled (e.g., to BF16, FP16, FP32, etc.) prior to the comparison operation. In some examples, results are downscaled prior to storage. Note upscaling, etc. may use a variable bias.

In some embodiments, the instruction is committed or retired at 711.

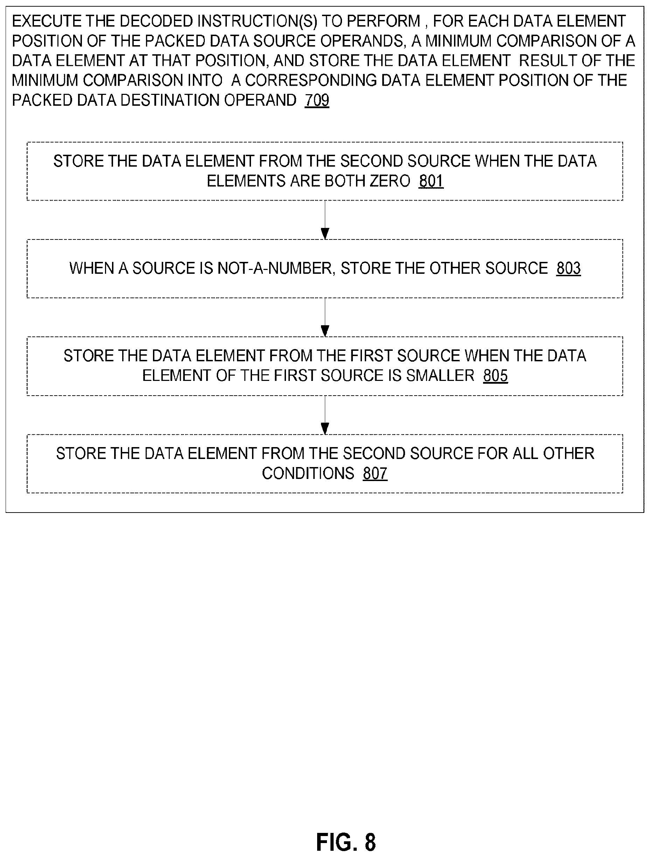

FIG. 8 illustrates more detailed embodiments of an execution of an instruction to determine a minimum value between FP8 data elements of corresponding data element positions of two sources. For example, in some embodiments, this figure illustrates operation 709 of FIG. 7.

The data element from the second source is stored when the data elements are both zero at 801.

When a source is not-a-number, store the other source at 803.

The data element from the first source is stored when the data element of the first source is larger at 805.

The data element from the second source is stored for all other conditions at 807.

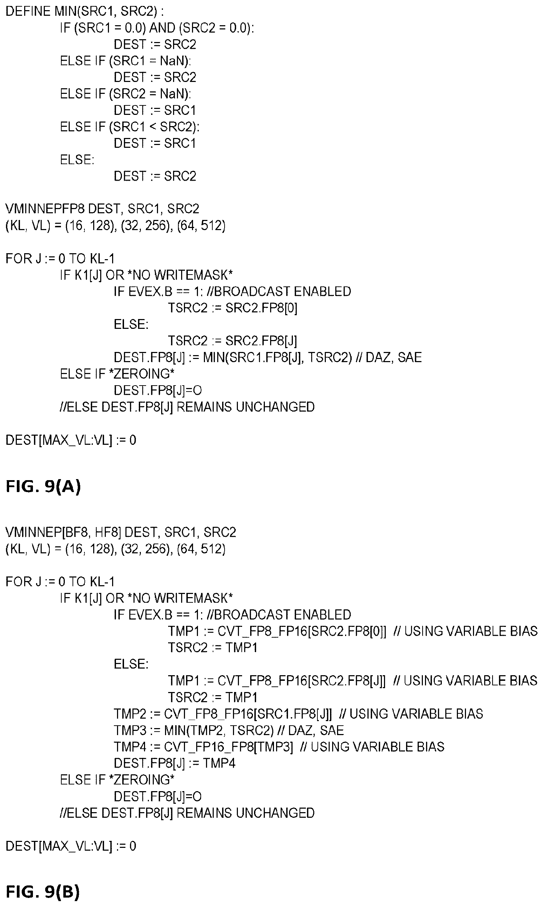

FIGS. 9(A)-(B) illustrate examples of pseudocode example embodiments representing the execution and format of an instruction to determine a minimum value between FP8 data elements of corresponding data element positions of two sources instruction. Note that EVEX.b maps to the b of prefix 2301(C). The comment of DAZ, FTZ, RNE, and SAE refer to the use of support for flush-to-zero (FTZ), denormals-are-zero (DAZ), suppress all exceptions (SAE), and round-to-even (RNE) rounding.

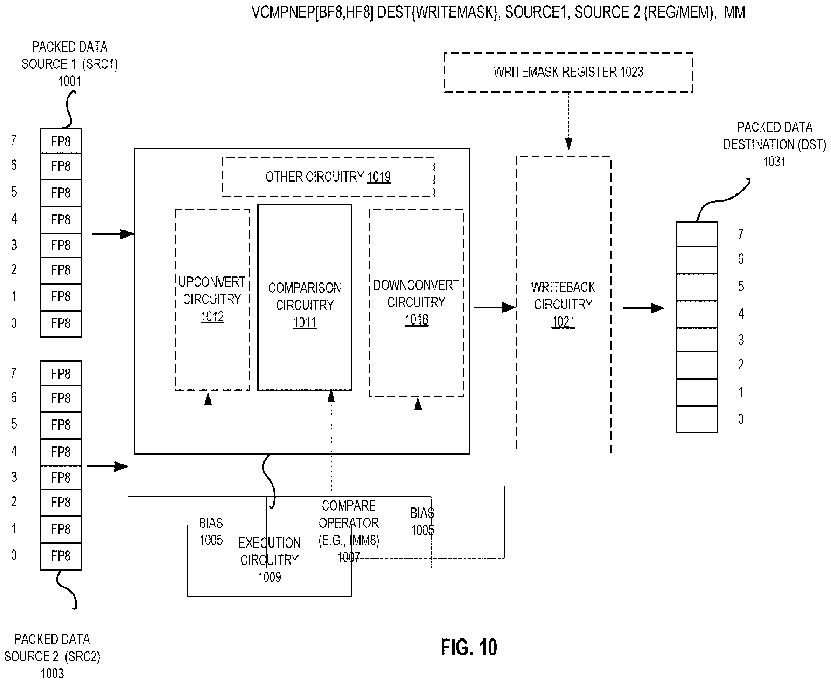

**FIG. 10** illustrates an exemplary execution of an instruction to compare values between FP8 data elements of corresponding data element positions of two sources according to a comparison operator. The comparison operator may be provided by an immediate, a referenced operand (e.g., a value stored in a register, etc.), etc.

While this illustration is in little endian format, the principles discussed herein work in big endian format. The compare values between FP8 data elements of corresponding data element positions of two sources according to a comparison operator instruction (shown here with an exemplary opcode mnemonic of VCMPNEP[BF8,HF8]) includes one or more fields to define the opcode for the instruction, one or more fields to reference or indicate two packed data sources (e.g., a register or memory location), and/or one or more fields to reference or indicate a packed data destination (e.g., a writemask register, predicate register, vector register or memory location). In some embodiments, the instruction also includes one or more fields to reference or indicate a writemask or predication register that is to store writemask or predicate values as described later.

An embodiment of a format for an instruction to compare values between FP8 data elements of corresponding data element positions of two sources according to a comparison operator is VCMPNEP[BF8,HF8] DST{k}, SRC1, SRC2 IMM8. In some embodiments, VCMPNEP [BF8,HF8] is the opcode mnemonic of the instruction where BF8 or HF8 are used to indicate the FP8 encoding. DST is a field for the destination operand identifier, such as packed data register or memory. SRC1 and SRC2 are fields for the source operands identifiers, such as packed data registers and/or memory. In some examples, the opcode is provided by at least field 2303, DST field is provided by field 2444, the first source is provided by bits VVVV of one of 2705, BPJ17, or 2817, and the second source is provided by 2446. In some examples, the opcode is provided by at least field 2303, DST field is provided by field 2444, the first source is provided by bits VVVV of one of 2705, BPJ17, or 2817, and the second source is a memory location provided by 2446 and/or the SIB byte 2404. Imm8 is provided by field 2309 in some examples. The source operands and destination operand may come in one or more sizes such as 128-bit, 256-bit, 512-bit, etc. IMM8 is an immediate. The {k} is used when writemasking or predication is used. HF8 and BF8 indicate the FP8 format used.

In this example, the packed data sources 1001 and 1003 include 8 packed FP8 data elements each of which is in FP8 format. At least one of the packed data sources 1001 and 1003 may be a register or a memory location. For memory operands, in some embodiments, either the numbers of bytes (e.g., 1) at the specified address corresponding to the length of the chosen vector register size is/are loaded from memory or a scalar value at the specified address is loaded from memory and broadcasted to all entries of the vector register.

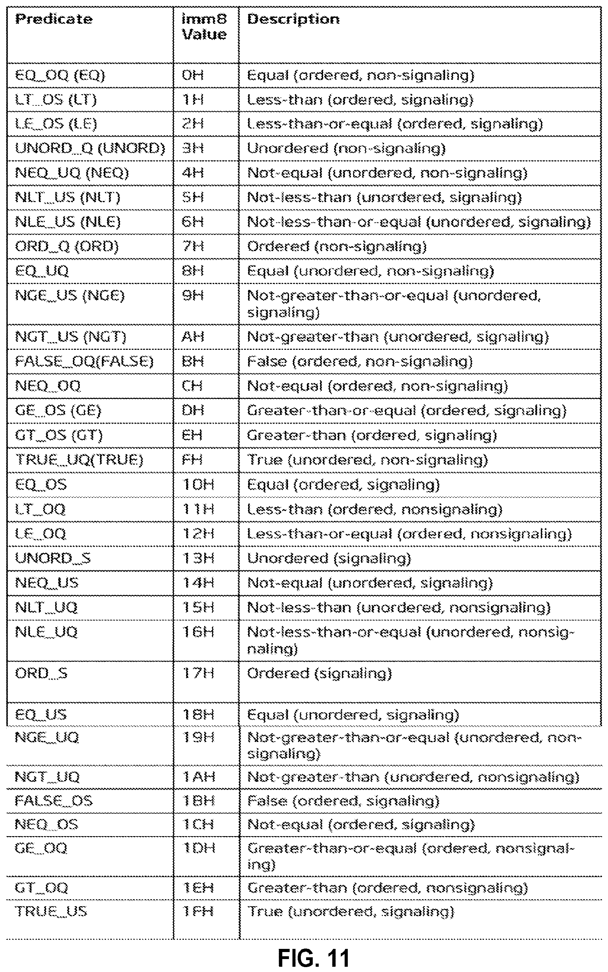

The packed data sources 1001 and 1003 are fed into execution circuitry 1009 to be operated on. In particular, execution circuitry 1009 determines which data element from corresponding data element positions of the packed data sources 1001 and 1003 to store based on the comparison operator provided by the compare operator 1007 using comparison circuitry 1011. In some embodiments, the data elements are signed. FIG. 11 provides examples of comparison operators according to some embodiments.

In some embodiments, this execution of the instruction uses a round to nearest (even) rounding mode. In some embodiments, output denormals are always flushed to zero and input denormals are always treated as zero.

The packed data destination 1031 is written to store the result of the comparison (true or false) in a corresponding packed data element of the packed data sources 1001 and 1003. In some embodiments, when the instruction calls for the use of predication or writemasking, a writemask (or predicate) register 1031 dictates how the resultant FP8 values are stored and/or zeroed using the writemask circuitry 1021. Note the destination may be a writemask register, a predication register (to the extent it is different than a writemask), or a vector register.

In some examples, FP8 values are upconverted using upconvert circuitry 1012. In some examples, a (variable or static) bias 1005 is applied during the upconversion. In some examples, the upconversion is to FP16. In some examples, the upconversion is to BF16. In some examples, the upconversion is to FP32.

In some examples, results of the operation are downconvered using downconvert circuitry 1018. In some examples, a bias (variable or static) 1005 is applied during the downconversion. In some examples, the downconversion is from FP16. In some examples, the downconversion is from BF16. In some examples, the downconversion is from FP32. In other examples, when FP8 is natively supported,no downconversion is performed.

In some examples, the execution circuitry 1009 is configured according to control information to use one or more of the described components instead of other execution circuits 1019. The control information may be provided by a decoder, scheduler, etc.

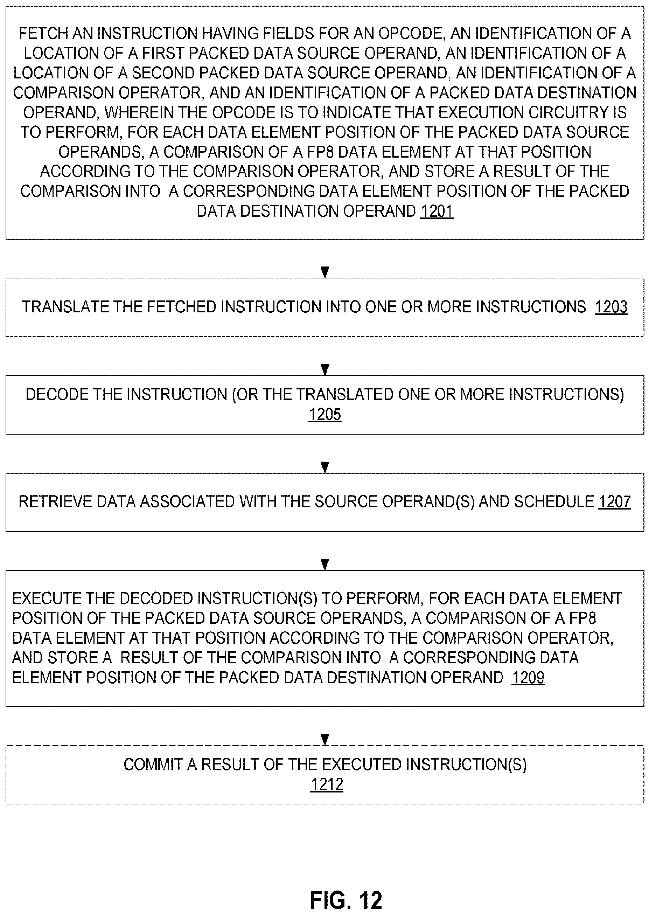

**FIG. 12** illustrates an embodiment of method to process an instruction to compare values between FP8 data elements of corresponding data element positions of two sources according to a comparison operator. For example, a processor core as shown herein, a pipeline as detailed below, etc. performs this method.

At 1201 an instruction is fetched having fields for an opcode, an identification of a location of a first packed data source operand, an identification of a location of a second packed data source operand, an identification of a comparison operator, and an identification of a packed data destination operand, wherein the opcode is to indicate that execution circuitry is to perform, for each data element position of the packed data source operands, a comparison of a FP8 data element at that position according to the comparison operator, and store the result of the comparison (e.g., true or false) into a corresponding data element position of the packed data destination operand.

In some embodiments, the fetched instruction, of a first ISA, is translated into one or more instructions of a second, different ISA at 1203. The one or more instructions of the second, different ISA, when executed, provided the same result as if the fetched instruction had been executed. Note the translation may be performed by hardware, software, or a combination thereof.

The instruction (or the translated one or more instructions) is/are decoded 1205. This decoding may cause the generation of one or more micro-operations to be performed. Note that as this instruction

Data values associated with the source operand of the decoded instruction are retrieved at 1207. For example, when a source operand is stored in memory, the data from the indicated memory location is retrieved.

At 1209, the decoded instruction(s) is/are executed by execution circuitry (hardware) such as that detailed herein. The execution circuitry is to perform, for each data element position of the packed data source operands, a comparison of a FP8 data element at that position according to the comparison operator, and store a result of the comparison into a corresponding data element position of the packed data destination operand. In some embodiments a writemask is used to determine what should be stored in the destination operand. In some examples, the data elements are upscaled (e.g., to BF16, FP16, FP32, etc.) prior to the comparison operation. In some examples, results are downscaled prior to storage. Note upscaling, etc. may use a variable bias.

In some embodiments, the instruction is committed or retired at 1211.

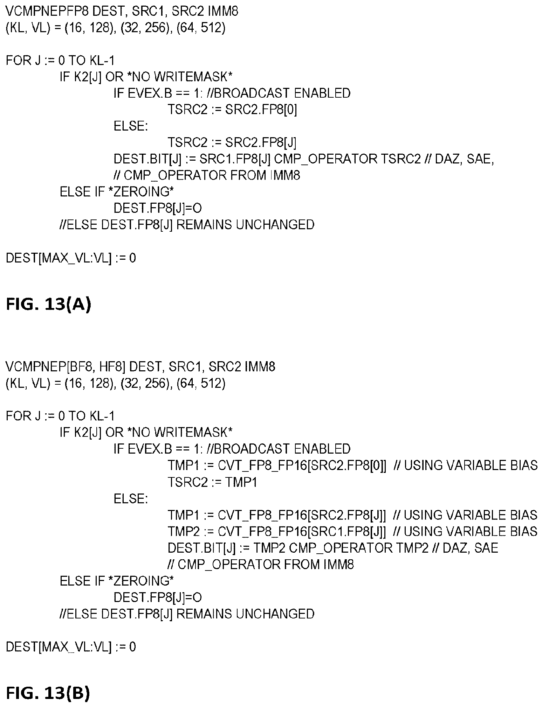

FIGS. 13(A)-(B) illustrates examples of pseudocode representing the execution and format of an instruction to compare values between FP8 data elements of corresponding data element positions of two sources according to a comparison operator. Note that EVEX.b maps to the b of prefix 2301(C). The comment of DAZ, FTZ, RNE, and SAE refer to the use of support for flush-to-zero (FTZ), denormals-are-zero (DAZ), suppress all exceptions (SAE), and round-to-even (RNE) rounding.

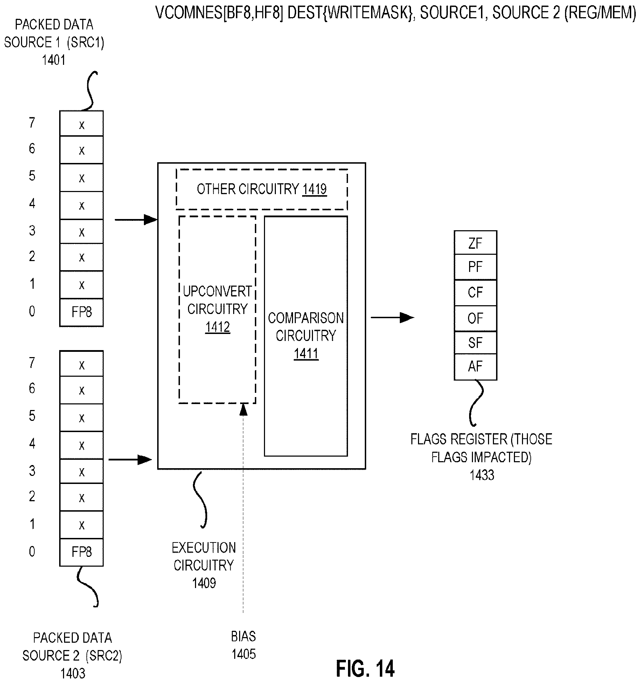

**FIG. 14** illustrates an exemplary execution of an instruction to compare FP8 values in a particular data element position of a first source operand and second source operand and sets a zero flag, parity flag, and a carry flag according to a result of the comparison. The particular combination of flag values indicating an unordered result, greater than result, less than result, or an equal result.

While this illustration is in little endian format, the principles discussed herein work in big endian format. The compare values between FP8 data elements of corresponding data element positions of two sources according to a comparison operator instruction (shown here with an exemplary opcode mnemonic of VCOMNES[BF8,HF8]) includes one or more fields to define the opcode for the instruction, one or more fields to reference or indicate two packed data sources (e.g., a register or memory location), and/or one or more fields to reference or indicate a packed data destination (e.g., a register or memory location). In some embodiments, the instruction also includes one or more fields to reference or indicate a writemask or predication register that is to store writemask or predicate values as described later.

An embodiment of a format for an instruction to compare FP8 values in a particular data element position of a first source operand and second source operand and sets a zero flag, parity flag, and a carry flag according to a result of the comparison is VCOMNES[BF8,HF8] SRC1, SRC2. In some embodiments, VCOMNES[BF8,HF8] is the opcode mnemonic of the instructionSRC1 and SRC2 are one or more fields for the sources such as packed data registers and/or memory. The source operands and destination operand may come in one or more sizes such as 128-bit, 256-bit, 512-bit, etc. HF8 and BF8 indicate the FP8 format used.

DST is a field for the destination operand identifier, such as packed data register or memory. SRC1 and SRC2 are fields for the source operands identifiers, such as packed data registers and/or memory. In some examples, the opcode is provided by at least field 2303, DST field is provided by field 2444, the first source is provided by bits VVVV of one of 2705, BPJ17, or 2817, and the second source is provided by 2446. In some examples, the opcode is provided by at least field 2303, DST field is provided by field 2444, the first source is provided by bits VVVV of one of 2705, BPJ17, or 2817, and the second source is a memory location provided by 2446 and/or the SIB byte 2404.

In this example, the packed data sources 1401 and 1403 include 8 packed FP8 data elements each of which is in FP8 format. At least one of the packed data sources 1401 and 1403 may be a register or a memory location. For memory operands, in some embodiments, either the numbers of bytes at the specified address corresponding to the length of the chosen vector register size are loaded from memory or a scalar value at the specified address is loaded from memory and broadcasted to all entries of the vector register.

The packed data sources 1401 and 1403 are fed into execution circuitry 1409 to be operated on. In particular, execution circuitry 1409 compares (using comparison circuitry 1411) FP8 values in a particular data element position of a first source operand and second source operand and sets a zero flag, parity flag, and a carry flag according to a result of the comparison. In some embodiments, when the result of the comparison is unordered, the zero flag, parity flag, and carry flag are all set to 1. In some embodiments, when the result of the comparison is that the first source is greater than the second source, the zero flag, parity flag, and carry flag are all set to 0. In some embodiments, when the result of the comparison is that the first source is less than the second source, the zero flag and parity flag are set to 0 and the carry flag is set to 1. In some embodiments, when the result of the comparison is that the first source equals the second source, the carry flag and parity flag are set to 0 and the zero flag is set to 1. In some embodiments, the particular data element position is the least significant data element position. Additionally, in some embodiments, the execution causes flags for overflow, sign, and adjust to be set to zero. In some embodiments, this execution of the instruction uses a round to nearest (even) rounding mode. In some embodiments, output denormals are always flushed to zero and input denormals are always treated as zero.

The packed data destination (flags register) 1433 is written to store the determined value in a corresponding packed data element of the packed data sources 1401 and 1403.

In some examples, FP8 values are upconverted using upconvert circuitry 1412. In some examples, a (variable or static) bias 1405 is applied during the upconversion. In some examples, the upconversion is to FP16. In some examples, the upconversion is to BF16. In some examples, the upconversion is to FP32.

In some examples, the execution circuitry 1409 is configured according to control information to use one or more of the described components instead of other execution circuits 1419. The control information may be provided by a decoder, scheduler, etc.

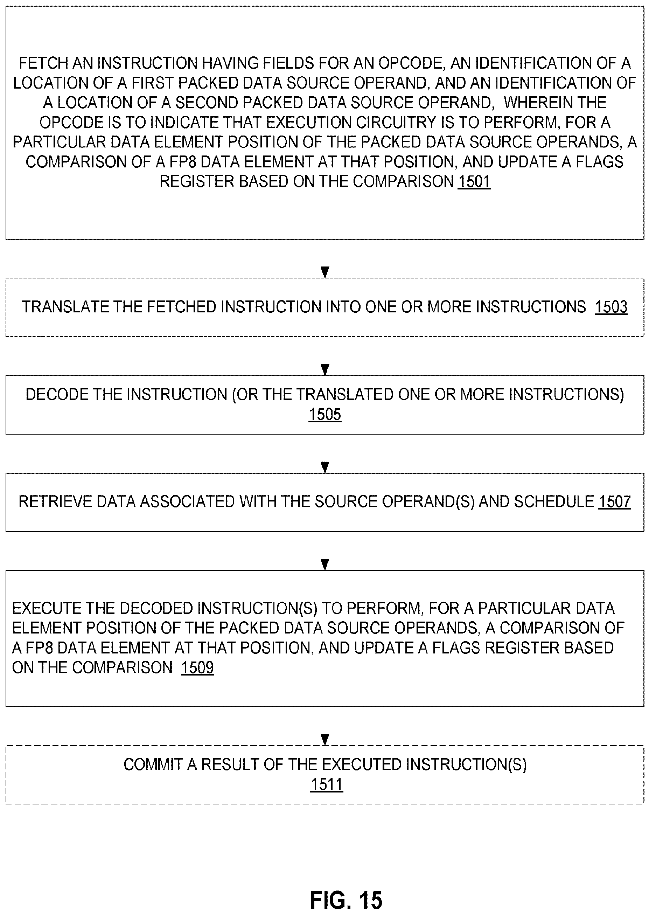

**FIG. 15** illustrates an embodiment of method performed by a processor to process an instruction to compare FP8 values in a particular data element position of a first source operand and second source operand and sets a zero flag, parity flag, and a carry flag according to a result of the comparison. For example, a processor core as shown herein, a pipeline as detailed below, etc. performs this method.

At 1501 an instruction is fetched having fields for an opcode, an identification of a location of a first packed data source operand, and an identification of a location of a second packed data source operand, wherein the opcode is to indicate that execution circuitry is to perform, for a particular data element position of the packed data source operands, a comparison of a FP8 data element at that position, and update a flags register based on the comparison. In some embodiments, the data element position is the least significant data element position. In some embodiments, when the result of the comparison is unordered (e.g., that one of the data elements is not-a-number), the zero flag, parity flag, and carry flag are all set to 1. In some embodiments, when the result of the comparison is that the first source is greater than the second source, the zero flag, parity flag, and carry flag are all set to 0. In some embodiments, when the result of the comparison is that the first source is less than the second source, the zero flag and parity flag are set to 0 and the carry flag is set to 1. In some embodiments, when the result of the comparison is that the first source equals the second source, the carry flag and parity flag are set to 0 and the zero flag is set to 1.

In some embodiments, the fetched instruction, of a first ISA, is translated into one or more instructions of a second, different ISA at 1503. The one or more instructions of the second, different ISA, when executed, provided the same result as if the fetched instruction had been executed. Note the translation may be performed by hardware, software, or a combination thereof.

The instruction (or the translated one or more instructions) is/are decoded 1505. This decoding may cause the generation of one or more micro-operations to be performed. Note that as this instruction

Data values associated with the source operand of the decoded instruction are retrieved at 1507. For example, when a source operand is stored in memory, the data from the indicated memory location is retrieved.

At 1509, the decoded instruction(s) is/are executed by execution circuitry (hardware) such as that detailed herein. The execution circuitry is to perform, for a particular significant data element position of the packed data source operands, a comparison of a FP8 data element at that position, and update a flags register based on the comparison. In some examples, the data elements are upscaled (e.g., to BF16, FP16, FP32, etc.) prior to the comparison operation. In some examples, results are downscaled prior to storage. Note upscaling, etc. may use a variable bias.

In some embodiments, the instruction is committed or retired at 1511.

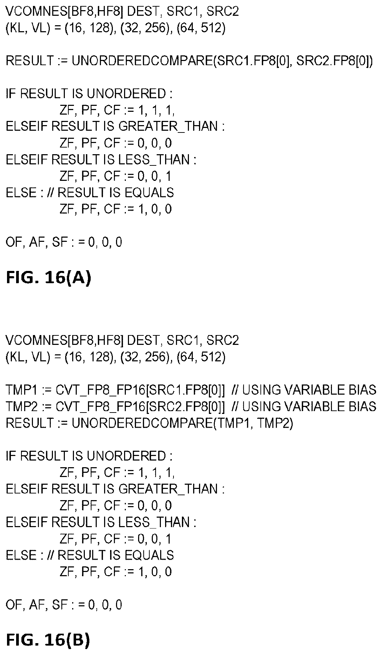

FIG. 16 illustrates example embodiments of pseudo code representing the execution and format of an instruction to compare FP8 values in a particular data element position of a first source operand and second source operand and sets a zero flag, parity flag, and a carry flag according to a result of the comparison.

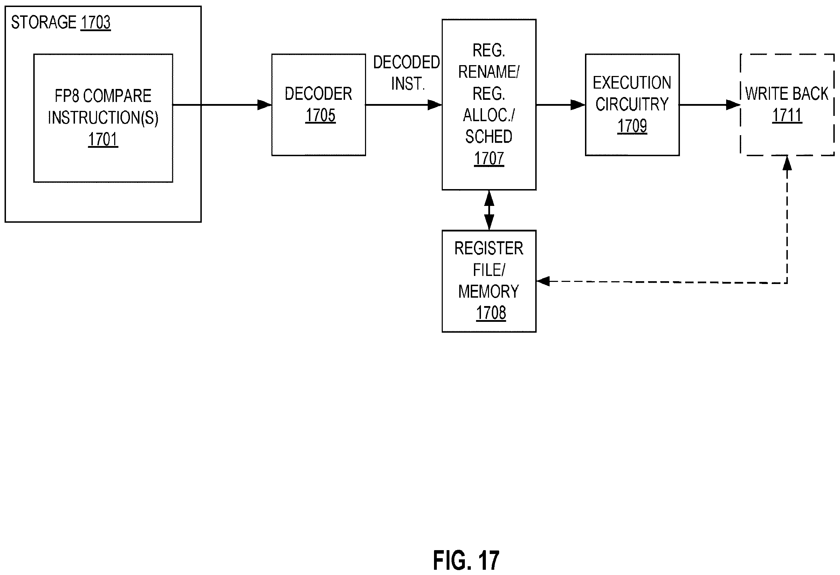

**FIG. 17** illustrates embodiments of hardware to process an instruction such as any of the FP8 compare instructions detailed above. As illustrated, storage 1703 stores at least one FP8 compare instruction 1701 to be executed.

The instruction 1701 is received by decode circuitry 1705. For example, the decode circuitry 1705 receives this instruction from fetch logic/circuitry. The instruction includes fields for an opcode, first and second sources, and a destination. In some embodiments, the sources and destination are registers, and in other embodiments one or more are memory locations. In some embodiments, the opcode details which arithmetic operation is to be performed.

More detailed embodiments of at least one instruction format will be detailed later. The decode circuitry 1705 decodes the instruction into one or more operations. In some embodiments, this decoding includes generating a plurality of micro-operations to be performed by execution circuitry (such as execution circuitry 1709). The decode circuitry 1705 also decodes instruction prefixes.

In some embodiments, register renaming, register allocation, and/or scheduling circuitry 1707 provides functionality for one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

Registers (register file) and/or memory 1708 store data as operands of the instruction to be operated on by execution circuitry 1709. Exemplary register types include packed data registers, general purpose registers, and floating-point registers.

Execution circuitry 1709 executes the decoded instruction. Exemplary detailed execution circuitry is shown in FIGS. 2, 5, 9, 20, etc. The execution of the decoded instruction causes the execution circuitry to execute as detailed above.

In some embodiments, retirement/write back circuitry 1711 architecturally commits the result 1708 and retires the instruction.

As noted above, in some examples FP8 data elements are upscaled by upconversion circuitry and/or 16-bit or 32-bit data elements downscaled by downconversion circuitry. Detailed below are example pseudocode representing acts the conversion circuitries perform. In some examples, this pseudocode is usable to create such circuitry (other pseudocode also be used to create circuitry such as aspects of execution circuitry in some examples). In the code below, the input is a data element, an indication of the FP8 type, a bias, and an indication of NaN handling. Note that this is merely illustrative and some aspects may not be included (for example, the BF8 or HF8 may be indicated by the helper function itself). Note that use of variants of convert (e.g., CVT, UPSCALE), DOWNSCALE may be used in other places. For example, in some of the pseudocode the helper function is merely UPSCALE or DOWNSCALE and one or more of the helper functions below may be used in its place including the use of a bias.

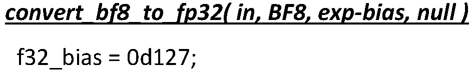

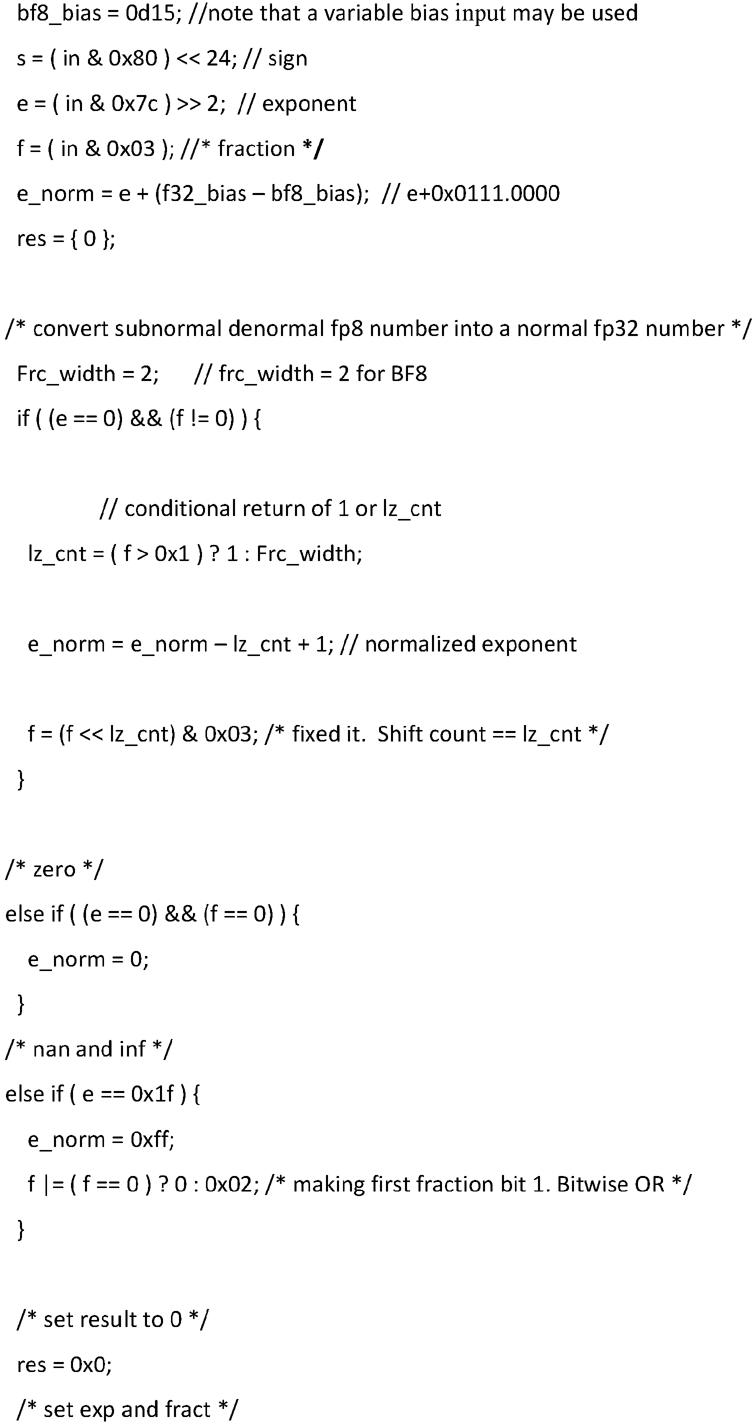

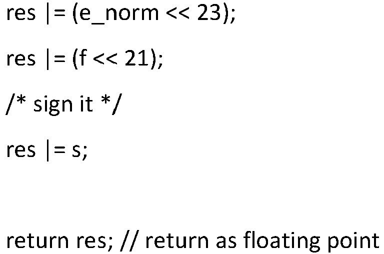

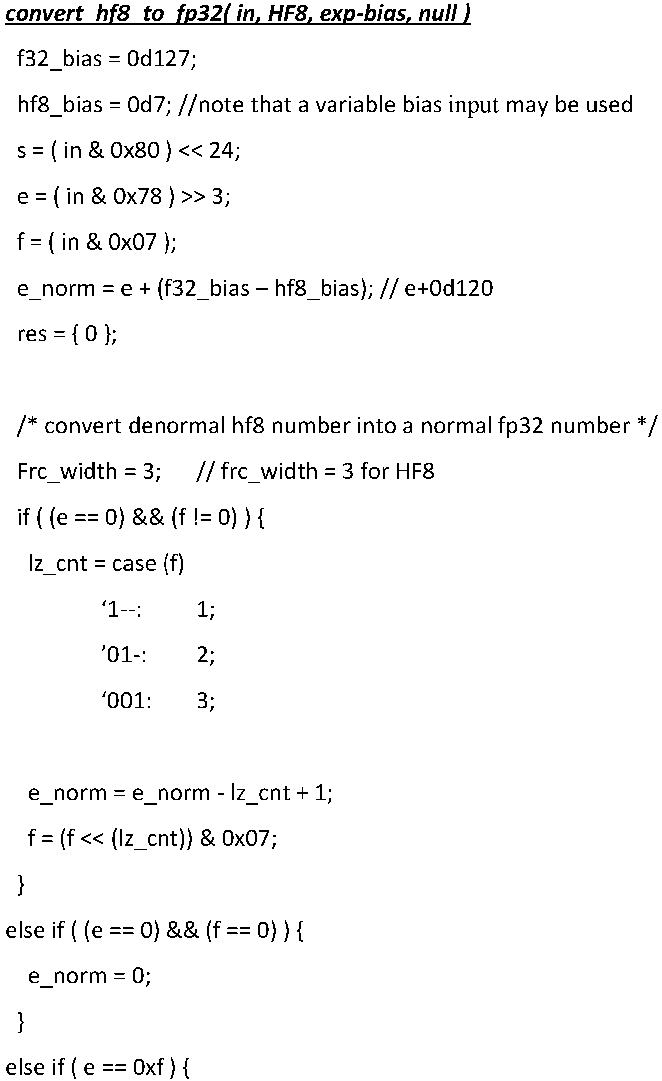

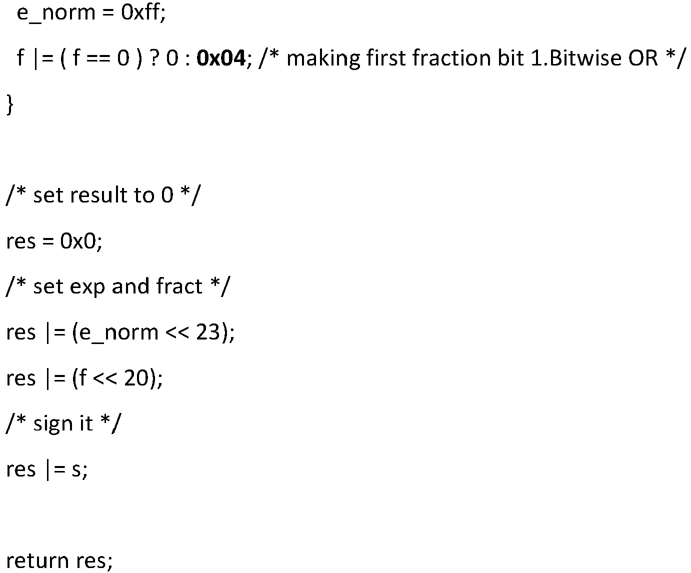

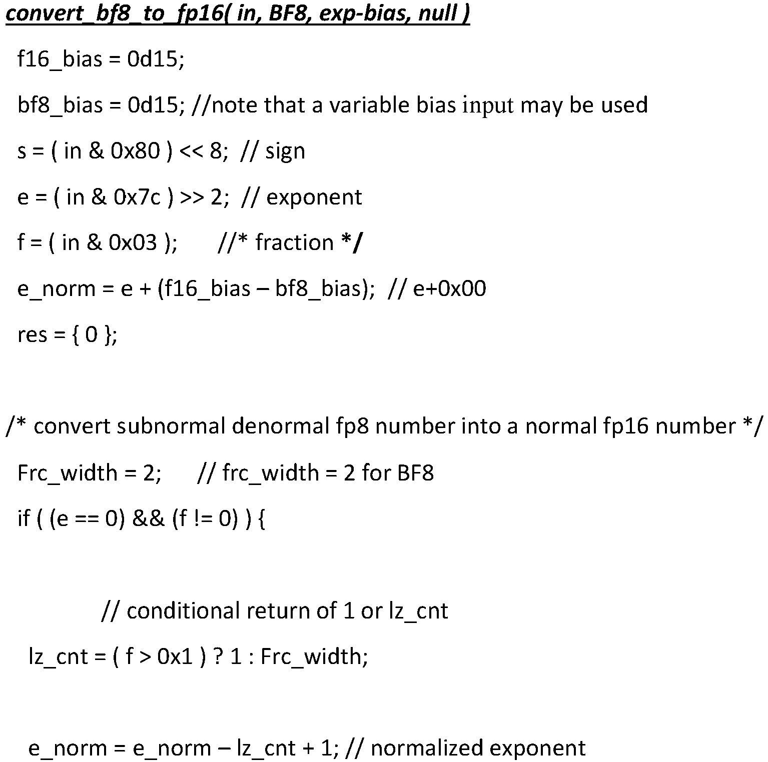

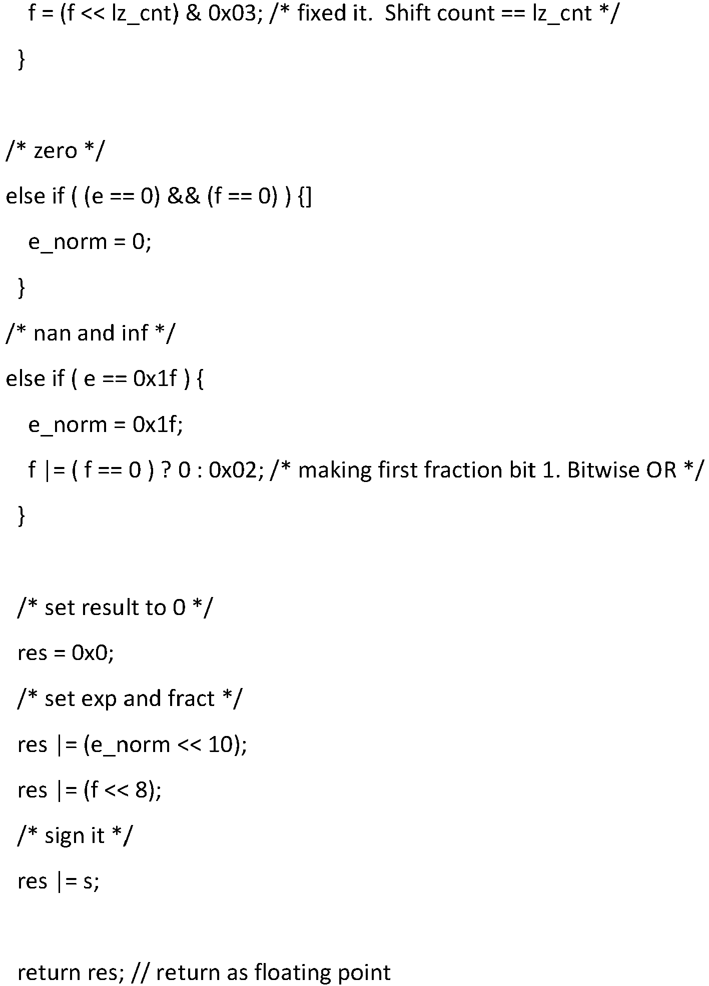

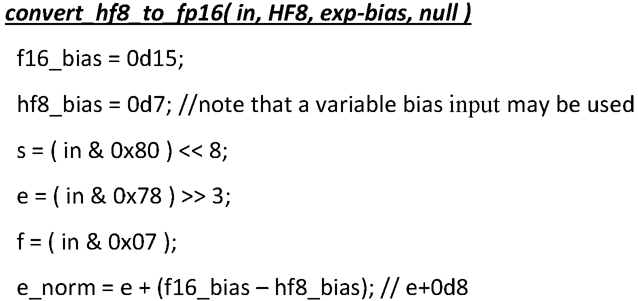

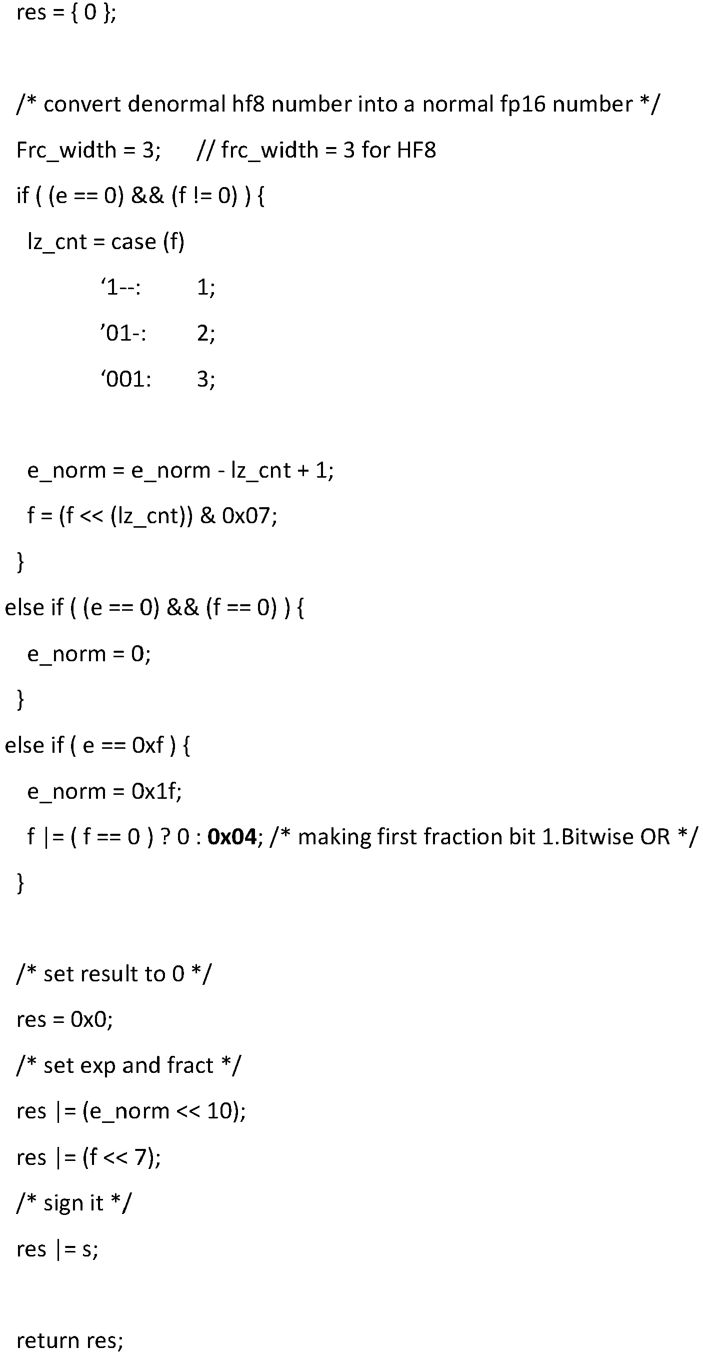

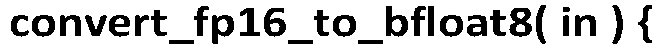

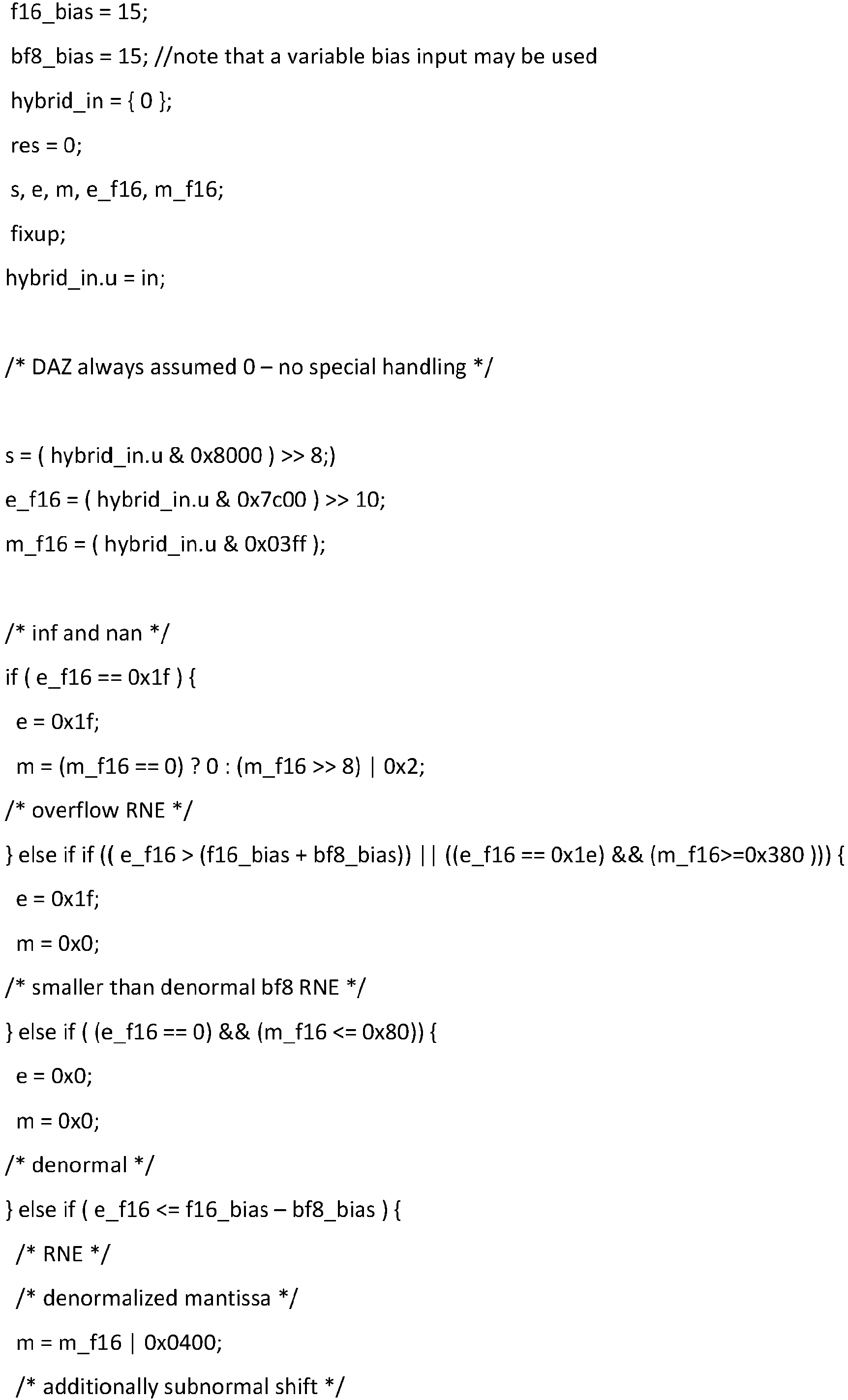

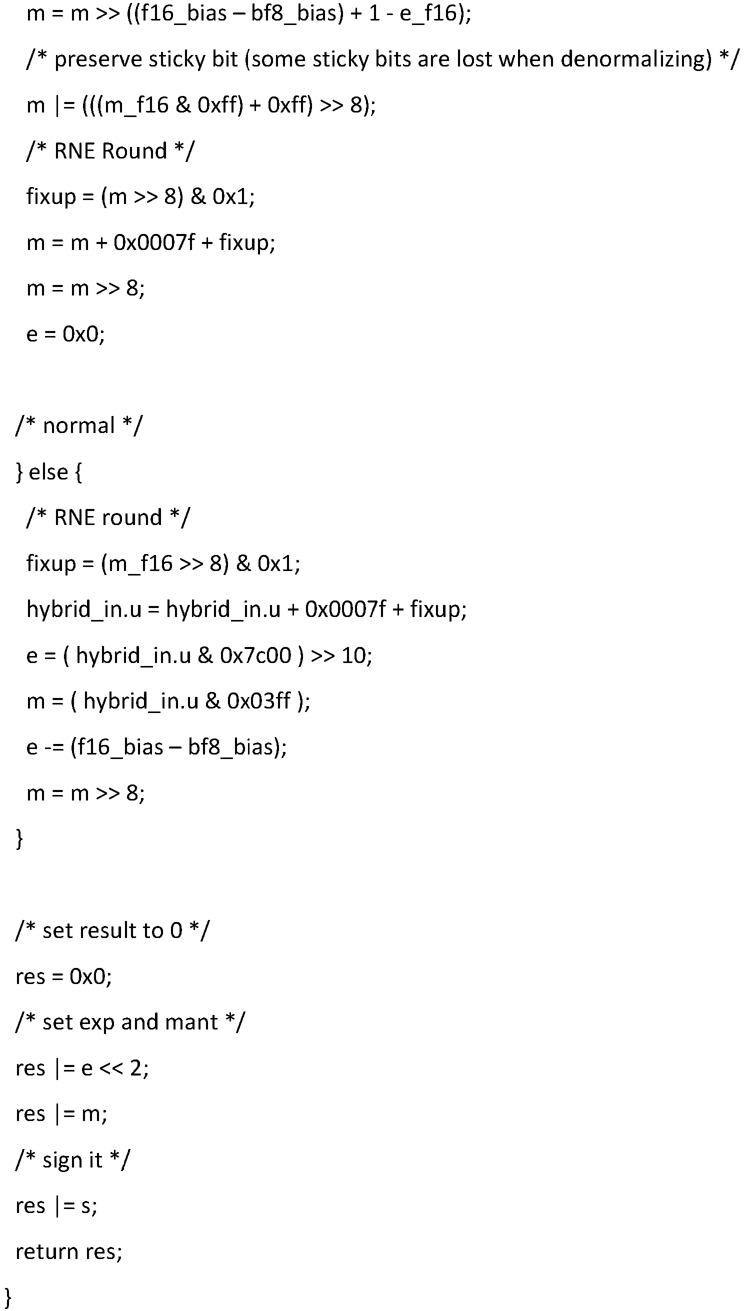

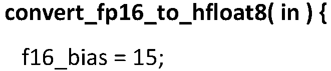

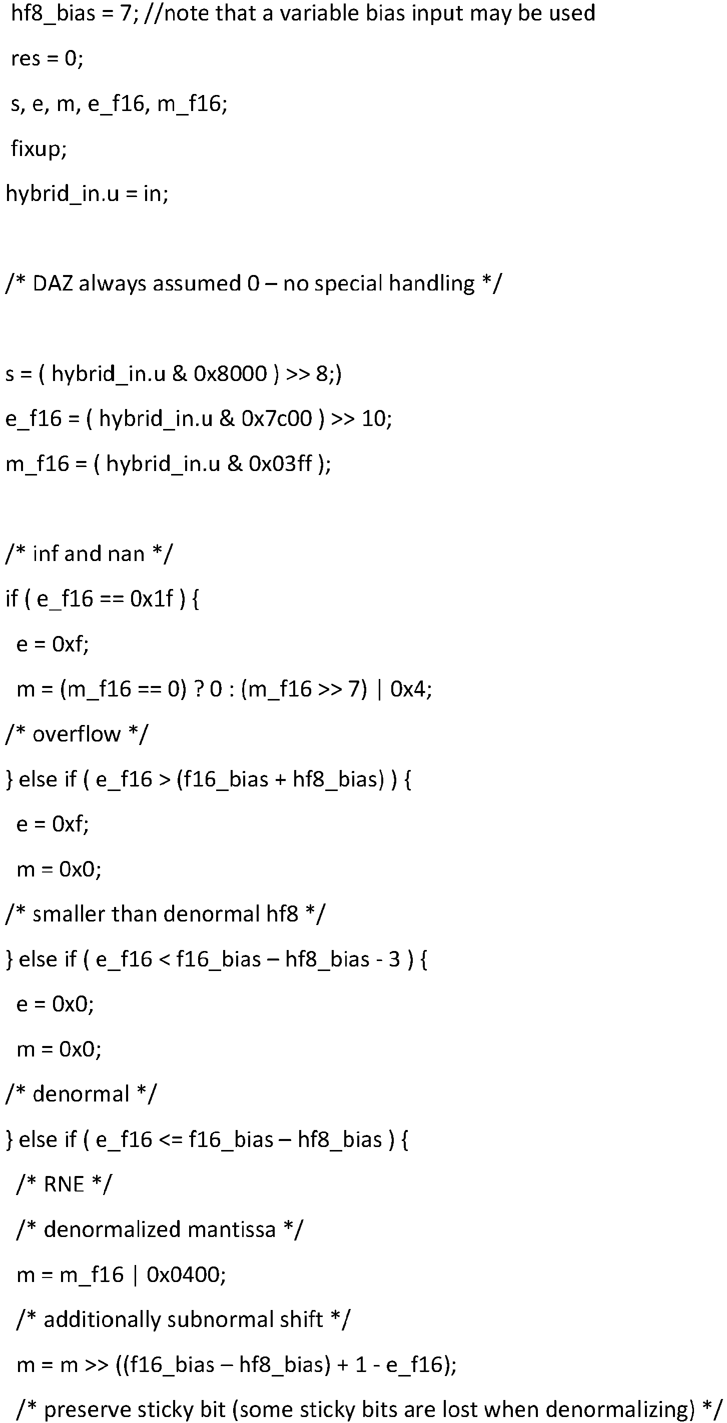

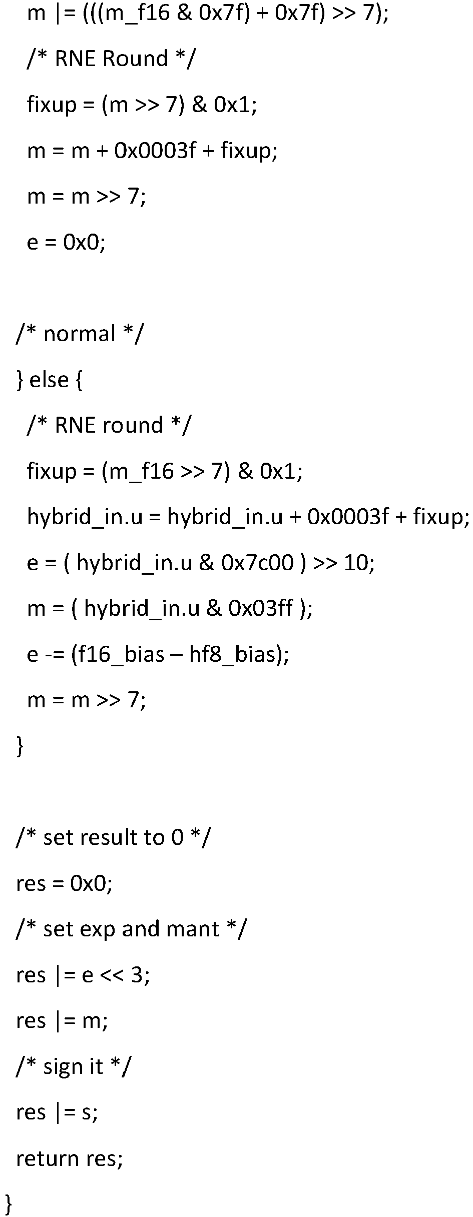

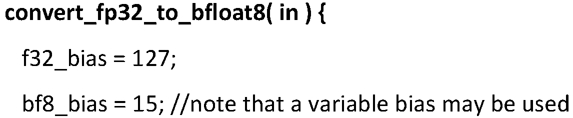

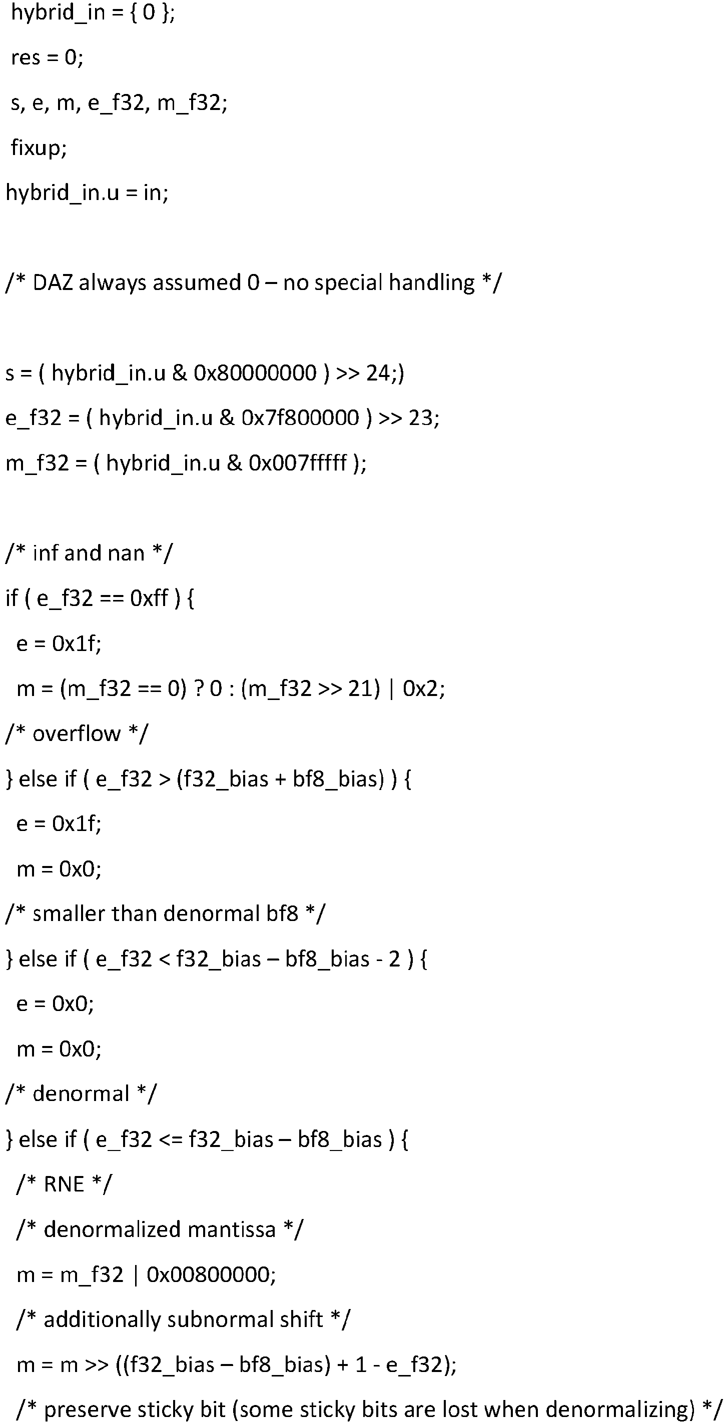

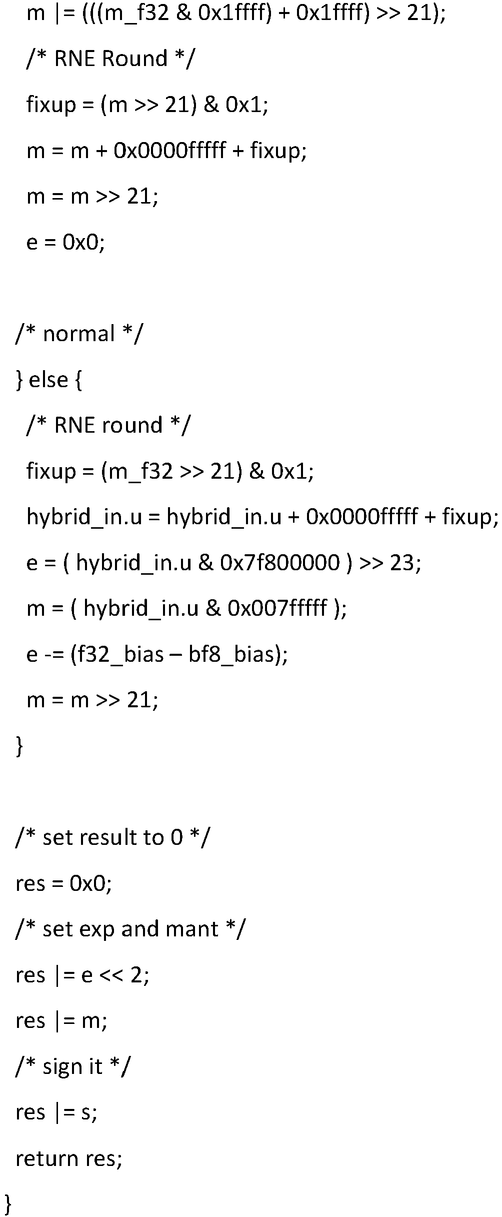

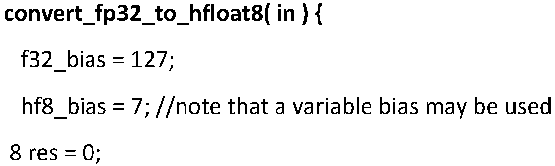

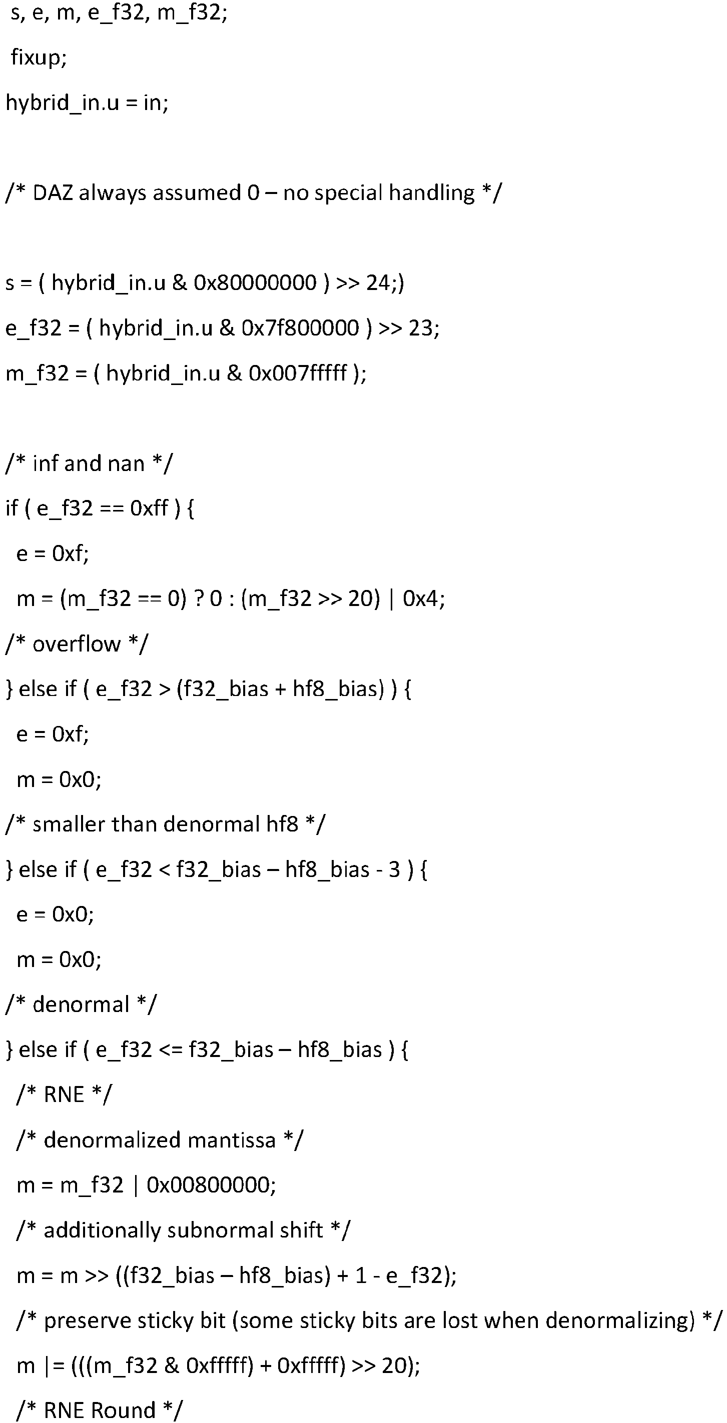

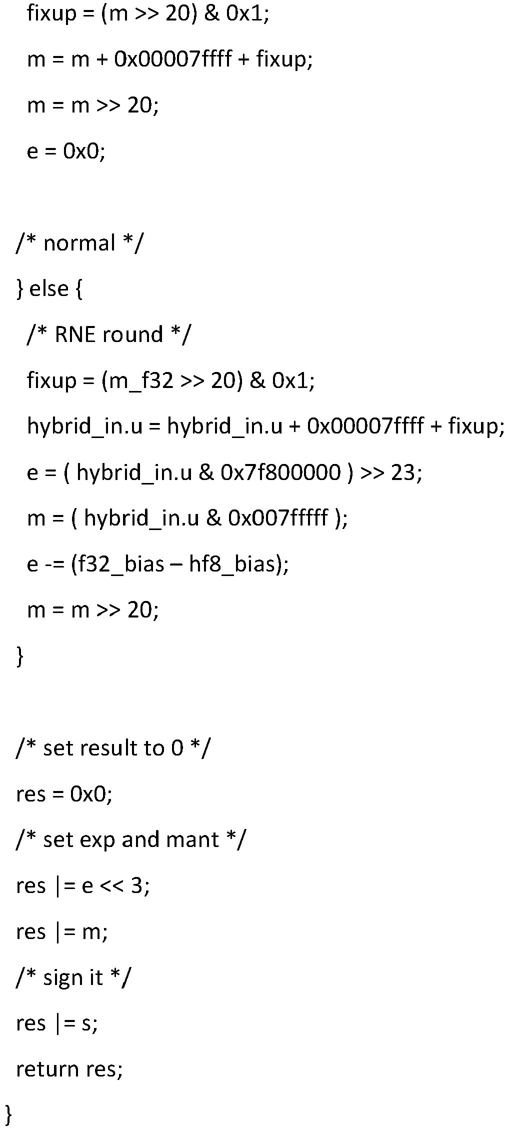

The instructions detailed above may be used in a variety of computer architectures and environments, utilize one or more instruction formats, etc. Examples of architectures, formats, etc. that support these instructions are detailed below.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

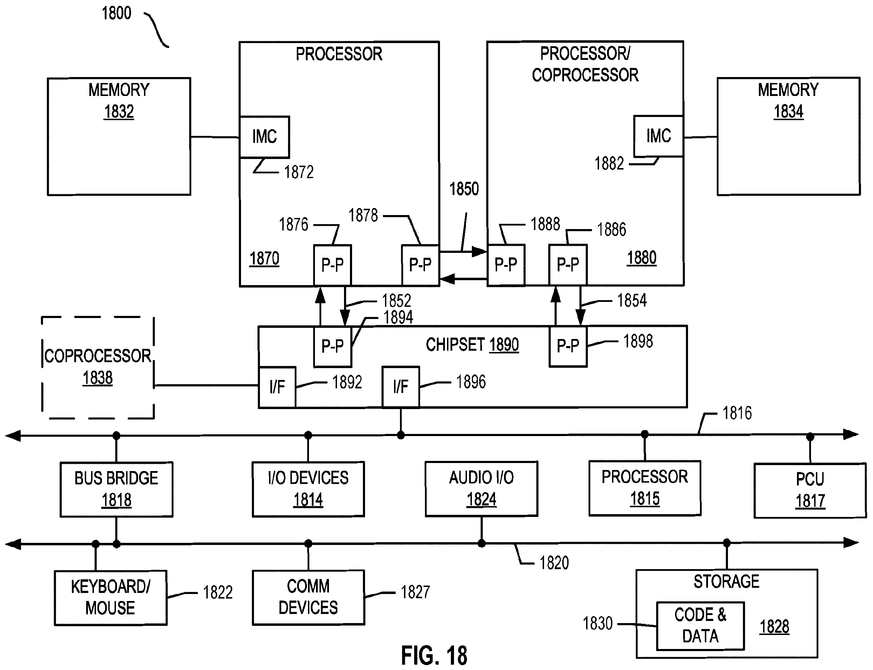

FIG. 18 illustrates an example computing system. Multiprocessor system 1800 is an interfaced system and includes a plurality of processors or cores including a first processor 1870 and a second processor 1880 coupled via an interface 1850 such as a point-to-point (P-P) interconnect, a fabric, and/or bus. In some examples, the first processor 1870 and the second processor 1880 are homogeneous. In some examples, first processor 1870 and the second processor 1880 are heterogenous. Though the example system 1800 is shown to have two processors, the system may have three or more processors, or may be a single processor system. In some examples, the computing system is a system on a chip (SoC).

Processors 1870 and 1880 are shown including integrated memory controller (IMC) circuitry 1872 and 1882, respectively. Processor 1870 also includes interface circuits 1876 and 1878; similarly, second processor 1880 includes interface circuits 1886 and 1888. Processors 1870, 1880 may exchange information via the interface 1850 using interface circuits 1878, 1888. IMCs 1872 and 1882 couple the processors 1870, 1880 to respective memories, namely a memory 1832 and a memory 1834, which may be portions of main memory locally attached to the respective processors.

Processors 1870, 1880 may each exchange information with a network interface (NW I/F) 1890 via individual interfaces 1852, 1854 using interface circuits 1876, 1894, 1886, 1898. The network interface 1890 (e.g., one or more of an interconnect, bus, and/or fabric, and in some examples is a chipset) may optionally exchange information with a coprocessor 1838 via an interface circuit 1892. In some examples, the coprocessor 1838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1870, 1880 or outside of both processors, yet connected with the processors via an interface such as P-P interconnect, such that either or both processors' local cache information may be stored in the shared cache if a processor is placed into a low power mode.

Network interface 1890 may be coupled to a first interface 1816 via interface circuit 1896. In some examples, first interface 1816 may be an interface such as a Peripheral Component Interconnect (PCI) interconnect, a PCI Express interconnect or another I/O interconnect. In some examples, first interface 1816 is coupled to a power control unit (PCU) 1817, which may include circuitry, software, and/or firmware to perform power management operations with regard to the processors 1870, 1880 and/or co-processor 1838. PCU 1817 provides control information to a voltage regulator (not shown) to cause the voltage regulator to generate the appropriate regulated voltage. PCU 1817 also provides control information to control the operating voltage generated. In various examples, PCU 1817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1817 is illustrated as being present as logic separate from the processor 1870 and/or processor 1880. In other cases, PCU 1817 may execute on a given one or more of cores (not shown) of processor 1870 or 1880. In some cases, PCU 1817 may be implemented as a microcontroller (dedicated or general-purpose) or other control logic configured to execute its own dedicated power management code, sometimes referred to as P-code. In yet other examples, power management operations to be performed by PCU 1817 may be implemented externally to a processor, such as by way of a separate power management integrated circuit (PMIC) or another component external to the processor. In yet other examples, power management operations to be performed by PCU 1817 may be implemented within BIOS or other system software.

Various I/O devices 1814 may be coupled to first interface 1816, along with a bus bridge 1818 which couples first interface 1816 to a second interface 1820. In some examples, one or more additional processor(s) 1815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1816. In some examples, second interface 1820 may be a low pin count (LPC) interface. Various devices may be coupled to second interface 1820 including, for example, a keyboard and/or mouse 1822, communication devices 1827 and storage circuitry 1828. Storage circuitry 1828 may be one or more non-transitory machine-readable storage media as described below, such as a disk drive or other mass storage device which may include instructions/code and data 1830 and may implement the storage 'ISAB03 in some examples. Further, an audio I/O 1824 may be coupled to second interface 1820. Note that other architectures than the point-to-point architecture described above are possible. For example, instead of the point-to-point architecture, a system such as multiprocessor system 1800 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

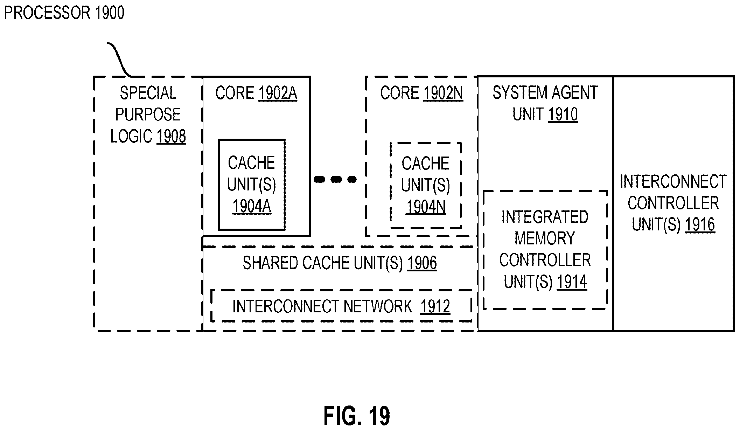

FIG. 19 illustrates a block diagram of an example processor and/or SoC 1900 that may have one or more cores and an integrated memory controller. The solid lined boxes illustrate a processor 1900 with a single core 1902(A), system agent unit circuitry 1910, and a set of one or more interface controller unit(s) circuitry 1916, while the optional addition of the dashed lined boxes illustrates an alternative processor 1900 with multiple cores 1902(A)-(N), a set of one or more integrated memory controller unit(s) circuitry 1914 in the system agent unit circuitry 1910, and special purpose logic 1908, as well as a set of one or more interface controller units circuitry 1916. Note that the processor 1900 may be one of the processors 1870 or 1880, or co-processor 1838 or 1815 of FIG. 18.

Thus, different implementations of the processor 1900 may include: 1) a CPU with the special purpose logic 1908 being integrated graphics and/or scientific (throughput) logic (which may include one or more cores, not shown), and the cores 1902(A)-(N) being one or more general purpose cores (e.g., general purpose in-order cores, general purpose out-of-order cores, or a combination of the two); 2) a coprocessor with the cores 1902(A)-(N) being a large number of special purpose cores intended primarily for graphics and/or scientific (throughput); and 3) a coprocessor with the cores 1902(A)-(N) being a large number of general purpose in-order cores. Thus, the processor 1900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1904(A)-(N) within the cores 1902(A)-(N), a set of one or more shared cache unit(s) circuitry 1906, and external memory (not shown) coupled to the set of integrated memory controller unit(s) circuitry 1914. The set of one or more shared cache unit(s) circuitry 1906 may include one or more mid-level caches, such as level 2 (L2), level 3 (L3), level 4 (L4), or other levels of cache, such as a last level cache (LLC), and/or combinations thereof. While in some examples interface network circuitry 1912 (e.g., a ring interconnect) interfaces the special purpose logic 1908 (e.g., integrated graphics logic), the set of shared cache unit(s) circuitry 1906, and the system agent unit circuitry 1910, alternative examples use any number of well-known techniques for interfacing such units. In some examples, coherency is maintained between one or more of the shared cache unit(s) circuitry 1906 and cores 1902(A)-(N). In some examples, interface controller units circuitry 1916 couple the cores 1902 to one or more other devices 1918 such as one or more I/O devices, storage, one or more communication devices (e.g., wireless networking, wired networking, etc.), etc.

In some examples, one or more of the cores 1902(A)-(N) are capable of multi-threading. The system agent unit circuitry 1910 includes those components coordinating and operating cores 1902(A)-(N). The system agent unit circuitry 1910 may include, for example, power control unit (PCU) circuitry and/or display unit circuitry (not shown). The PCU may be or may include logic and components needed for regulating the power state of the cores 1902(A)-(N) and/or the special purpose logic 1908 (e.g., integrated graphics logic). The display unit circuitry is for driving one or more externally connected displays.

The cores 1902(A)-(N) may be homogenous in terms of instruction set architecture (ISA). Alternatively, the cores 1902(A)-(N) may be heterogeneous in terms of ISA; that is, a subset of the cores 1902(A)-(N) may be capable of executing an ISA, while other cores may be capable of executing only a subset of that ISA or another ISA.

### Example Core Architectures - In-order and out-of-order core block diagram.

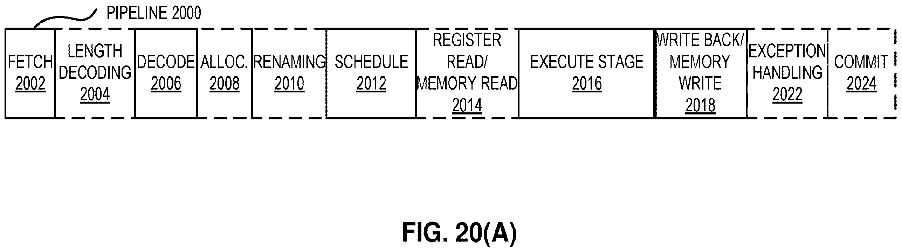

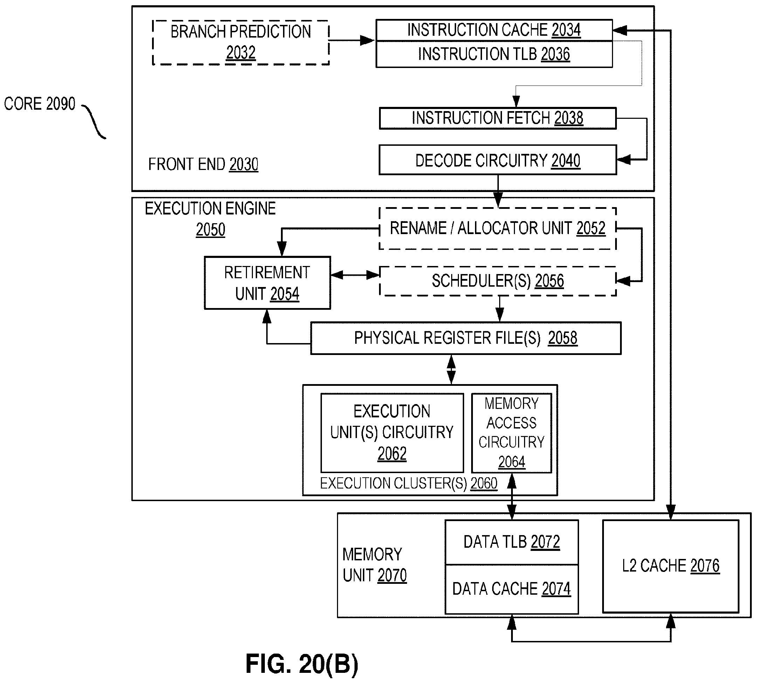

FIG. 20(A) is a block diagram illustrating both an example in-order pipeline and an example register renaming, out-of-order issue/execution pipeline according to examples. FIG. 20(B) is a block diagram illustrating both an example in-order architecture core and an example register renaming, out-of-order issue/execution architecture core to be included in a processor according to examples. The solid lined boxes in FIGS. 20(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 20(A), a processor pipeline 2000 includes a fetch stage 2002, an optional length decoding stage 2004, a decode stage 2006, an optional allocation (Alloc) stage 2008, an optional renaming stage 2010, a schedule (also known as a dispatch or issue) stage 2012, an optional register read/memory read stage 2014, an execute stage 2016, a write back/memory write stage 2018, an optional exception handling stage 2022, and an optional commit stage 2024. One or more operations can be performed in each of these processor pipeline stages. For example, during the fetch stage 2002, one or more instructions are fetched from instruction memory, and during the decode stage 2006, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 2006 and the register read/memory read stage 2014 may be combined into one pipeline stage. In one example, during the execute stage 2016, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 20(B) may implement the pipeline 2000 as follows: 1) the instruction fetch circuitry 2038 performs the fetch and length decoding stages 2002 and 2004; 2) the decode circuitry 2040 performs the decode stage 2006; 3) the rename/allocator unit circuitry 2052 performs the allocation stage 2008 and renaming stage 2010; 4) the scheduler(s) circuitry 2056 performs the schedule stage 2012; 5) the physical register file(s) circuitry 2058 and the memory unit circuitry 2070 perform the register read/memory read stage 2014; the execution cluster(s) 2060 perform the execute stage 2016; 6) the memory unit circuitry 2070 and the physical register file(s) circuitry 2058 perform the write back/memory write stage 2018; 7) various circuitry may be involved in the exception handling stage 2022; and 8) the retirement unit circuitry 2054 and the physical register file(s) circuitry 2058 perform the commit stage 2024.

FIG. 20(B) shows a processor core 2090 including front-end unit circuitry 2030 coupled to execution engine unit circuitry 2050, and both are coupled to memory unit circuitry 2070. The core 2090 may be a reduced instruction set architecture computing (RISC) core, a complex instruction set architecture computing (CISC) core, a very long instruction word (VLIW) core, or a hybrid or alternative core type. As yet another option, the core 2090 may be a special-purpose core, such as, for example, a network or communication core, compression engine, coprocessor core, general purpose computing graphics processing unit (GPGPU) core, graphics core, or the like.

The front-end unit circuitry 2030 may include branch prediction circuitry 2032 coupled to instruction cache circuitry 2034, which is coupled to an instruction translation lookaside buffer (TLB) 2036, which is coupled to instruction fetch circuitry 2038, which is coupled to decode circuitry 2040. In one example, the instruction cache circuitry 2034 is included in the memory unit circuitry 2070 rather than the front-end circuitry 2030. The decode circuitry 2040 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 2040 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 2040 may be implemented using various different mechanisms. Examples of suitable mechanisms include, but are not limited to, look-up tables, hardware implementations, programmable logic arrays (PLAs), microcode read only memories (ROMs), etc. In one example, the core 2090 includes a microcode ROM (not shown) or other medium that stores microcode for certain macroinstructions (e.g., in decode circuitry 2040 or otherwise within the front-end circuitry 2030). In one example, the decode circuitry 2040 includes a micro-operation (micro-op) or operation cache (not shown) to hold/cache decoded operations, micro-tags, or micro-operations generated during the decode or other stages of the processor pipeline 2000. The decode circuitry 2040 may be coupled to rename/allocator unit circuitry 2052 in the execution engine circuitry 2050.

The execution engine circuitry 2050 includes the rename/allocator unit circuitry 2052 coupled to retirement unit circuitry 2054 and a set of one or more scheduler(s) circuitry 2056. The scheduler(s) circuitry 2056 represents any number of different schedulers, including reservations stations, central instruction window, etc. In some examples, the scheduler(s) circuitry 2056 can include arithmetic logic unit (ALU) scheduler/scheduling circuitry, ALU queues, address generation unit (AGU) scheduler/scheduling circuitry, AGU queues, etc. The scheduler(s) circuitry 2056 is coupled to the physical register file(s) circuitry 2058. Each of the physical register file(s) circuitry 2058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 2058 includes vector registers unit circuitry, writemask registers unit circuitry, and scalar register unit circuitry. These register units may provide architectural vector registers, vector mask registers, general-purpose registers, etc. The physical register file(s) circuitry 2058 is coupled to the retirement unit circuitry 2054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 2054 and the physical register file(s) circuitry 2058 are coupled to the execution cluster(s) 2060. The execution cluster(s) 2060 includes a set of one or more execution unit(s) circuitry 2062 and a set of one or more memory access circuitry 2064. The execution unit(s) circuitry 2062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 2056, physical register file(s) circuitry 2058, and execution cluster(s) 2060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 2064). It should also be understood that where separate pipelines are used, one or more of these pipelines may be out-of-order issue/execution and the rest in-order.

In some examples, the execution engine unit circuitry 2050 may perform load store unit (LSU) address/data pipelining to an Advanced Microcontroller Bus (AMB) interface (not shown), and address phase and writeback, data phase load, store, and branches.

The set of memory access circuitry 2064 is coupled to the memory unit circuitry 2070, which includes data TLB circuitry 2072 coupled to data cache circuitry 2074 coupled to level 2 (L2) cache circuitry 2076. In one example, the memory access circuitry 2064 may include load unit circuitry, store address unit circuitry, and store data unit circuitry, each of which is coupled to the data TLB circuitry 2072 in the memory unit circuitry 2070. The instruction cache circuitry 2034 is further coupled to the level 2 (L2) cache circuitry 2076 in the memory unit circuitry 2070. In one example, the instruction cache 2034 and the data cache 2074 are combined into a single instruction and data cache (not shown) in L2 cache circuitry 2076, level 3 (L3) cache circuitry (not shown), and/or main memory. The L2 cache circuitry 2076 is coupled to one or more other levels of cache and eventually to a main memory.

The core 2090 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 2090 includes logic to support a packed data instruction set architecture extension (e.g., AVX1, AVX2), thereby allowing the operations used by many multimedia applications to be performed using packed data.

### Example Execution Unit(s) Circuitry.

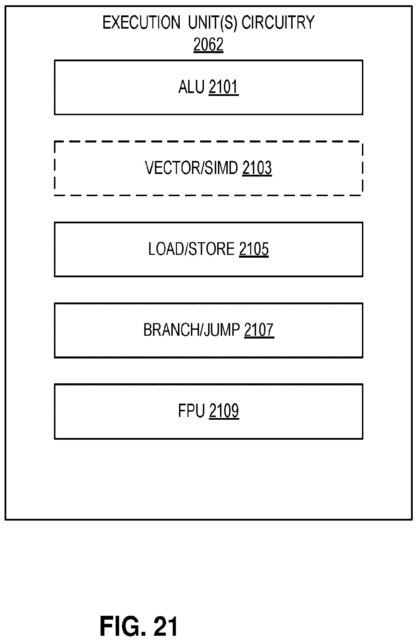

FIG. 21 illustrates examples of execution unit(s) circuitry, such as execution unit(s) circuitry 2062 of FIG. 20(B). As illustrated, execution unit(s) circuity 2062 may include one or more ALU circuits 2101, optional vector/single instruction multiple data (SIMD) circuits 2103, load/store circuits 2105, branch/jump circuits 2107, and/or Floating-point unit (FPU) circuits 2109. ALU circuits 2101 perform integer arithmetic and/or Boolean operations. Vector/SIMD circuits 2103 perform vector/SIMD operations on packed data (such as SIMD/vector registers). Load/store circuits 2105 execute load and store instructions to load data from memory into registers or store from registers to memory. Load/store circuits 2105 may also generate addresses. Branch/jump circuits 2107 cause a branch or jump to a memory address depending on the instruction. FPU circuits 2109 perform floating-point arithmetic. The width of the execution unit(s) circuitry 2062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

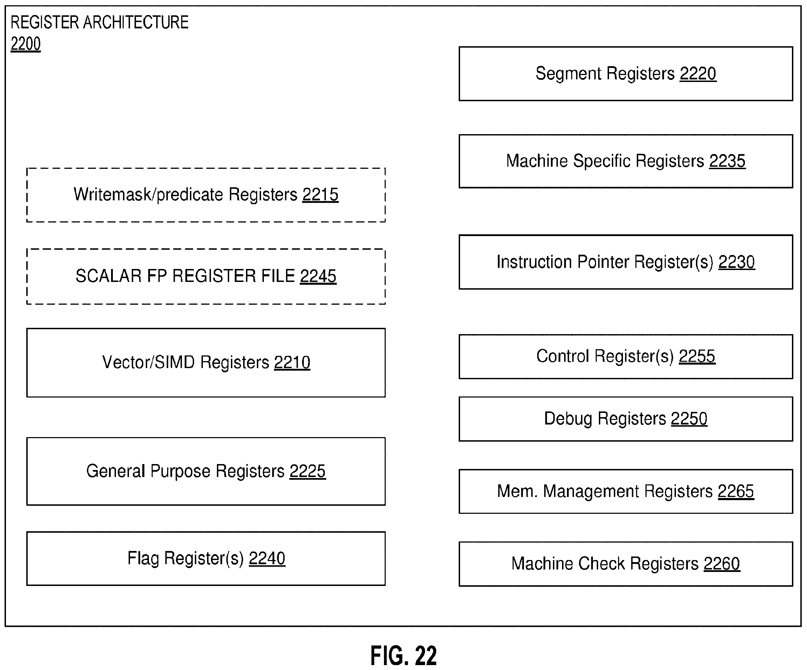

FIG. 22 is a block diagram of a register architecture 2200 according to some examples. As illustrated, the register architecture 2200 includes vector/SIMD registers 2210 that vary from 128-bit to 1,024 bits width. In some examples, the vector/SIMD registers 2210 are physically 512-bits and, depending upon the mapping, only some of the lower bits are used. For example, in some examples, the vector/SIMD registers 2210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 2200 includes writemask/predicate registers 2215. For example, in some examples, there are 8 writemask/predicate registers (sometimes called k0 through k7) that are each 16-bit, 32-bit, 64-bit, or 128-bit in size. Writemask/predicate registers 2215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 2215 corresponds to a data element position of the destination. In other examples, the writemask/predicate registers 2215 are scalable and consists of a set number of enable bits for a given vector element (e.g., 8 enable bits per 64-bit vector element).

The register architecture 2200 includes a plurality of general-purpose registers 2225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 2200 includes scalar floating-point (FP) register file 2245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 2240 (e.g., EFLAGS, RFLAGS, etc.) store status and control information for arithmetic, compare, and system operations. For example, the one or more flag registers 2240 may store condition code information such as carry, parity, auxiliary carry, zero, sign, and overflow. In some examples, the one or more flag registers 2240 are called program status and control registers.

Segment registers 2220 contain segment points for use in accessing memory. In some examples, these registers are referenced by the names CS, DS, SS, ES, FS, and GS.

Model specific registers or machine specific registers (MSRs) 2235 control and report on processor performance. Most MSRs 2235 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 2260 consist of control, status, and error reporting MSRs that are used to detect and report on hardware errors. Control register(s) 2255 (e.g., CR0-CR4) determine the operating mode of a processor (e.g., processor 1870, 1880, 1838, 1815, and/or 1900) and the characteristics of a currently executing task. In some examples, MSRs 2235 are a subset of control registers 2255.

One or more instruction pointer register(s) 2230 store an instruction pointer value. Debug registers 2250 control and allow for the monitoring of a processor or core's debugging operations.

Memory (mem) management registers 2265 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 2200 may, for example, be used in register file / memory 'ISAB08, or physical register file(s) circuitry 20 58.

Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

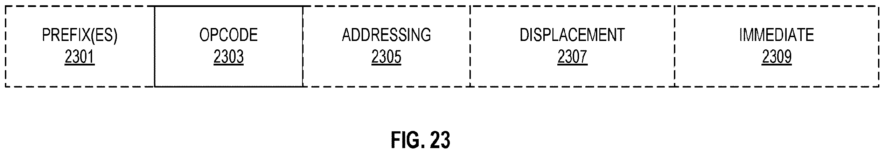

FIG. 23 illustrates examples of an instruction format. As illustrated, an instruction may include multiple components including, but not limited to, one or more fields for: one or more prefixes 2301, an opcode 2303, addressing information 2305 (e.g., register identifiers, memory addressing information, etc.), a displacement value 2307, and/or an immediate value 2309. Note that some instructions utilize some or all the fields of the format whereas others may only use the field for the opcode 2303. In some examples, the order illustrated is the order in which these fields are to be encoded, however, it should be appreciated that in other examples these fields may be encoded in a different order, combined, etc.

The prefix(es) field(s) 2301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2303 is used to at least partially define the operation to be performed upon a decoding of the instruction. In some examples, a primary opcode encoded in the opcode field 2303 is one, two, or three bytes in length. In other examples, a primary opcode can be a different length. An additional 3-bit opcode field is sometimes encoded in another field.

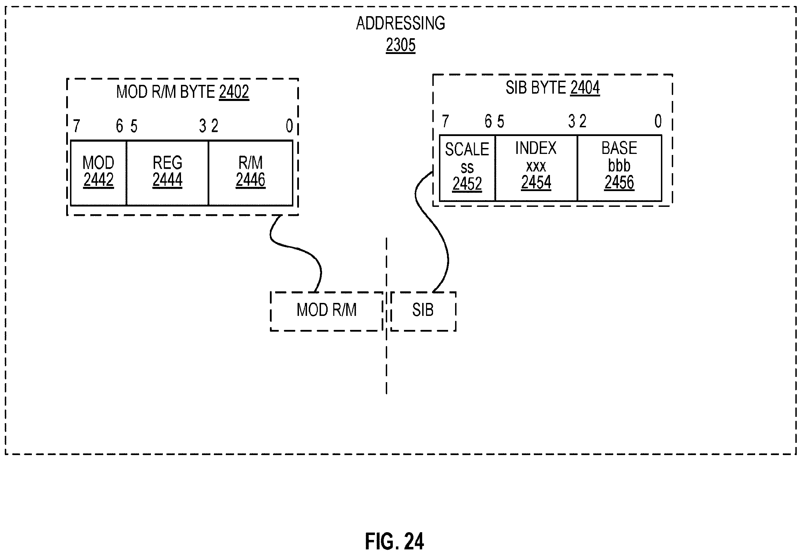

The addressing information field 2305 is used to address one or more operands of the instruction, such as a location in memory or one or more registers. FIG. 24 illustrates examples of the addressing information field 2305. In this illustration, an optional MOD R/M byte 2402 and an optional Scale, Index, Base (SIB) byte 2404 are shown. The MOD R/M byte 2402 and the SIB byte 2404 are used to encode up to two operands of an instruction, each of which is a direct register or effective memory address. Note that both of these fields are optional in that not all instructions include one or more of these fields. The MOD R/M byte 2402 includes a MOD field 2442, a register (reg) field 2444, and R/M field 2446.

The content of the MOD field 2442 distinguishes between memory access and non-memory access modes. In some examples, when the MOD field 2442 has a binary value of 11 (11b), a register-direct addressing mode is utilized, and otherwise a register-indirect addressing mode is used.

The register field 2444 may encode either the destination register operand or a source register operand or may encode an opcode extension and not be used to encode any instruction operand. The content of register field 2444, directly or through address generation, specifies the locations of a source or destination operand (either in a register or in memory). In some examples, the register field 2444 is supplemented with an additional bit from a prefix (e.g., prefix 2301) to allow for greater addressing.

The R/M field 2446 may be used to encode an instruction operand that references a memory address or may be used to encode either the destination register operand or a source register operand. Note the R/M field 2446 may be combined with the MOD field 2442 to dictate an addressing mode in some examples.

The SIB byte 2404 includes a scale field 2452, an index field 2454, and a base field 2456 to be used in the generation of an address. The scale field 2452 indicates a scaling factor. The index field 2454 specifies an index register to use. In some examples, the index field 2454 is supplemented with an additional bit from a prefix (e.g., prefix 2301) to allow for greater addressing. The base field 2456 specifies a base register to use. In some examples, the base field 2456 is supplemented with an additional bit from a prefix (e.g., prefix 2301) to allow for greater addressing. In practice, the content of the scale field 2452 allows for the scaling of the content of the index field 2454 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2307 provides this value. Additionally, in some examples, a displacement factor usage is encoded in the MOD field of the addressing information field 2305 that indicates a compressed displacement scheme for which a displacement value is calculated and stored in the displacement field 2307.

In some examples, the immediate value field 2309 specifies an immediate value for the instruction. An immediate value may be encoded as a 1-byte value, a 2-byte value, a 4-byte value, etc.

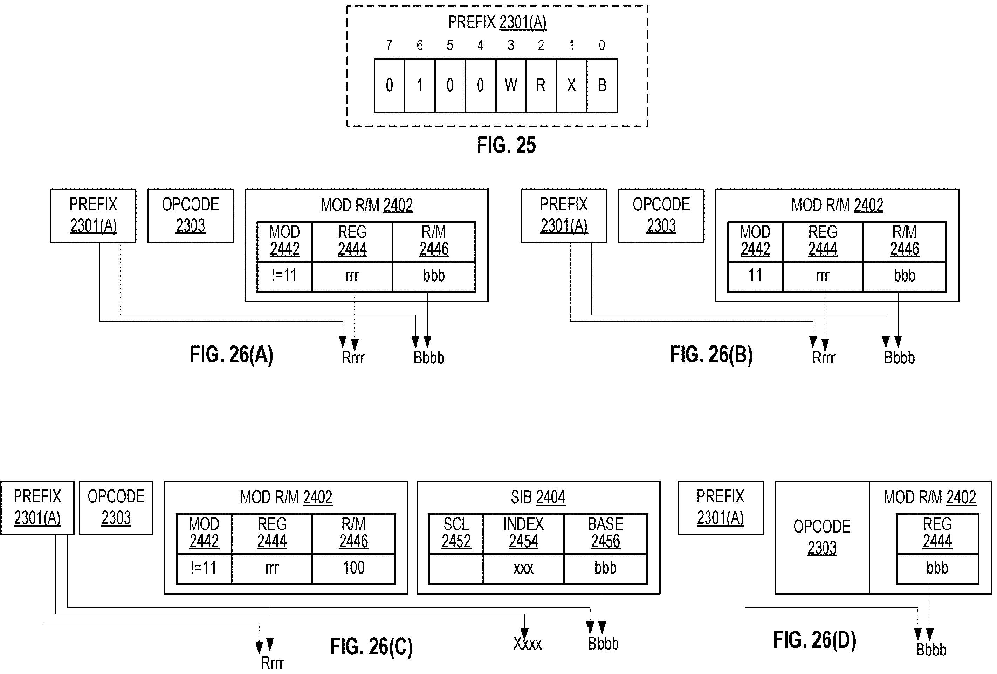

FIG. 25 illustrates examples of a first prefix 2301(A). In some examples, the first prefix 2301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2301(A) may specify up to three registers using 3-bit fields depending on the format: 1) using the reg field 2444 and the R/M field 2446 of the MOD R/M byte 2402; 2) using the MOD R/M byte 2402 with the SIB byte 2404 including using the reg field 2444 and the base field 2456 and index field 2454; or 3) using the register field of an opcode.

In the first prefix 2301(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 2444 and MOD R/M R/M field 2446 alone can each only address 8 registers.

In the first prefix 2301(A), bit position 2 (R) may be an extension of the MOD R/M reg field 2444 and may be used to modify the MOD R/M reg field 2444 when that field encodes a general-purpose register, a 64-bit packed data register (e.g., a SSE register), or a control or debug register. R is ignored when MOD R/M byte 2402 specifies other registers or defines an extended opcode.

Bit position 1 (X) may modify the SIB byte index field 2454.

Bit position 0 (B) may modify the base in the MOD R/M R/M field 2446 or the SIB byte base field 2456; or it may modify the opcode register field used for accessing general purpose registers (e.g., general purpose registers 2225).

FIGS. 26(A)-(D) illustrate examples of how the R, X, and B fields of the first prefix 2301(A) are used. FIG. 26(A) illustrates R and B from the first prefix 2301(A) being used to extend the reg field 2444 and R/M field 2446 of the MOD R/M byte 2402 when the SIB byte 2404 is not used for memory addressing. FIG. 26(B) illustrates R and B from the first prefix 2301(A) being used to extend the reg field 2444 and R/M field 2446 of the MOD R/M byte 2402 when the SIB byte 24 04 is not used (register-register addressing). FIG. 26(C) illustrates R, X, and B from the first prefix 2301(A) being used to extend the reg field 2444 of the MOD R/M byte 2402 and the index field 2454 and base field 2456 when the SIB byte 2404 being used for memory addressing. FIG. 26(D) illustrates B from the first prefix 2301(A) being used to extend the reg field 2444 of the MOD R/M byte 2402 when a register is encoded in the opcode 2303.

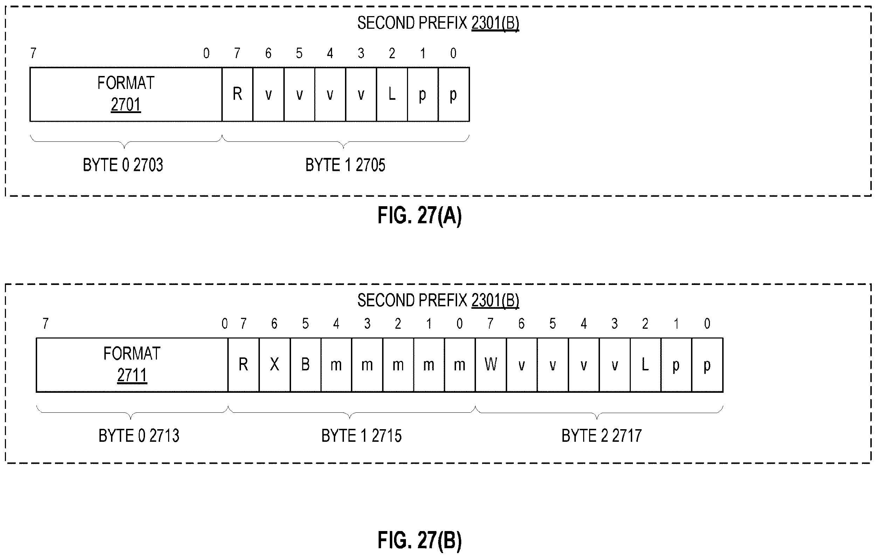

FIGS. 27(A)-(B) illustrate examples of a second prefix 2301(B). In some examples, the second prefix 2301(B) is an example of a VEX prefix. The second prefix 2301(B) encoding allows instructions to have more than two operands, and allows SIMD vector registers (e.g., vector/SIMD registers 2210) to be longer than 64-bits (e.g., 128-bit and 256-bit). The use of the second prefix 2301(B) provides for three-operand (or more) syntax. For example, previous two-operand instructions performed operations such as A = A + B, which overwrites a source operand. The use of the second prefix 2301(B) enables operands to perform nondestructive operations such as A = B + C.

In some examples, the second prefix 2301(B) comes in two forms - a two-byte form and a three-byte form. The two-byte second prefix 2301(B) is used mainly for 128-bit, scalar, and some 256-bit instructions; while the three-byte second prefix 2301(B) provides a compact replacement of the first prefix 2301(A) and 3-byte opcode instructions.

FIG. 27(A) illustrates examples of a two-byte form of the second prefix 2301(B). In one example, a format field 2701 (byte 0 2703) contains the value C5H. In one example, byte 1 2705 includes an "R" value in bit[7]. This value is the complement of the "R" value of the first prefix 2301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2446 to encode the instruction operand that references a memory address or encode either the destination register operand or a source register operand.

Instructions that use this prefix may use the MOD R/M reg field 2444 to encode either the destination register operand or a source register operand, or to be treated as an opcode extension and not used to encode any instruction operand.

For instruction syntax that support four operands, vvvv, the MOD R/M R/M field 2446 and the MOD R/M reg field 2444 encode three of the four operands. Bits[7:4] of the immediate value field 2309 are then used to encode the third source register operand.

FIG. 27(B) illustrates examples of a three-byte form of the second prefix 2301(B). In one example, a format field 2711 (byte 0 2713) contains the value C4H. Byte 1 2715 includes in bits[7:5] "R," "X," and "B" which are the complements of the same values of the first prefix 2301(A). Bits[4:0] of byte 1 2715 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2717 is used similar to W of the first prefix 2301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2446 to encode the instruction operand that references a memory address or encode either the destination register operand or a source register operand.

Instructions that use this prefix may use the MOD R/M reg field 2444 to encode either the destination register operand or a source register operand, or to be treated as an opcode extension and not used to encode any instruction operand.

For instruction syntax that support four operands, vvvv, the MOD R/M R/M field 2446, and the MOD R/M reg field 2444 encode three of the four operands. Bits[7:4] of the immediate value field 2309 are then used to encode the third source register operand.

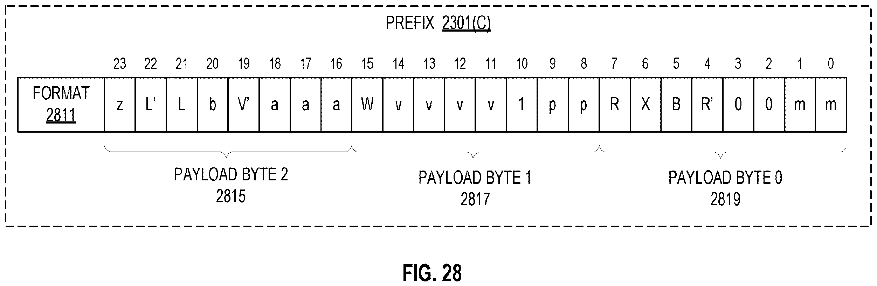

FIG. 28 illustrates examples of a third prefix 2301(C). In some examples, the third prefix 2301(C) is an example of an EVEX prefix. The third prefix 2301(C) is a four-byte prefix.

The third prefix 2301(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 22) or predication utilize this prefix. Opmask register allow for conditional processing or selection control. Opmask instructions, whose source/destination operands are opmask registers and treat the content of an opmask register as a single value, are encoded using the second prefix 2301(B).

The third prefix 2301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2301(C) is a format field 2811 that has a value, in one example, of 62H. Subsequent bytes are referred to as payload bytes 2815-2819 and collectively form a 24-bit value of P[23:0] providing specific capability in the form of one or more fields (detailed herein).

In some examples, P[1:0] of payload byte 2819 are identical to the low two mm bits. P[3:2] are reserved in some examples. Bit P[4] (R') allows access to the high 16 vector register set when combined with P[7] and the MOD R/M reg field 2444. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2444 and MOD R/M R/M field 2446. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 2301(A) and second prefix 2311(B) and may serve as an opcode extension bit or operand size promotion.

P[18:16] specify the index of a register in the opmask (writemask) registers (e.g., writemask/predicate registers 2215). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 2301(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

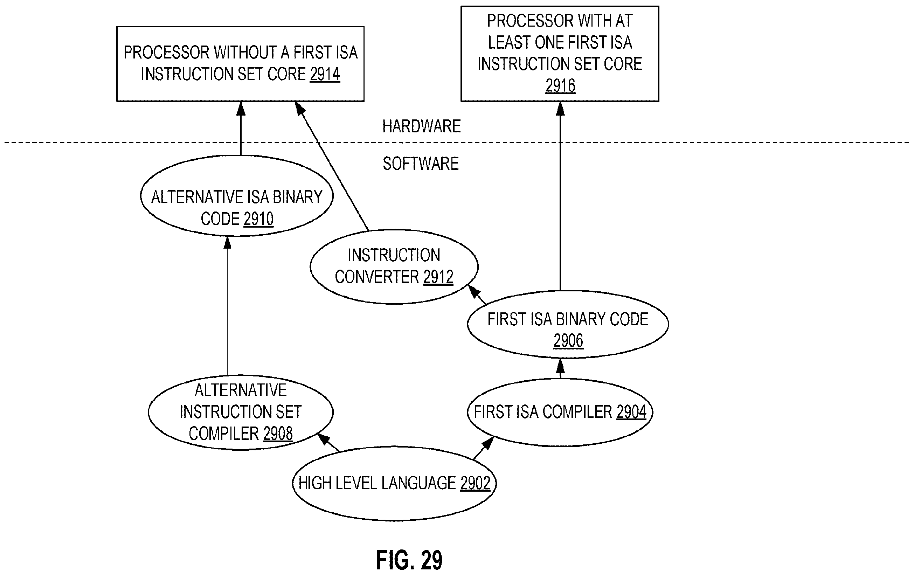

FIG. 29 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 29 shows a program in a high-level language 2902 may be compiled using a first ISA compiler 2904 to generate first ISA binary code 2906 that may be natively executed by a processor with at least one first ISA core 2916. The processor with at least one first ISA core 2916 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2904 represents a compiler that is operable to generate first ISA binary code 2906 (e.g., object code) that can, with or without additional linkage processing, be executed on the processor with at least one first ISA core 2916. Similarly, FIG. 29 shows the program in the high-level language 2902 may be compiled using an alternative ISA compiler 2908 to generate alternative ISA binary code 2910 that may be natively executed by a processor without a first ISA core 2914. The instruction converter 2912 is used to convert the first ISA binary code 2906 into code that may be natively executed by the processor without a first ISA core 2914. This converted code is not necessarily to be the same as the alternative ISA binary code 2910; however, the converted code will accomplish the general operation and be made up of instructions from the alternative ISA. Thus, the instruction converter 2912 represents software, firmware, hardware, or a combination thereof that, through emulation, simulation or any other process, allows a processor or other electronic device that does not have a first ISA processor or core to execute the first ISA binary code 2906.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader scope of the disclosure as set forth in the claims.

## Claims

1. An apparatus comprising:
decode circuitry (1705) to decode an instance of a single instruction, the single instruction to include fields for an opcode, an identification of a location of a first packed data source operand, and an identification of a location of a second packed data source operand, wherein the opcode is to indicate that execution circuitry is to perform, for a particular data element position of the packed data source operands, a comparison of a FP8 data element at that position, update a zero flag, a parity flag, and a carry flag of a flags register based on the comparison, and set an overflow flag, a sign flag, and an adjust flag of the flags register to zero; and
the execution circuitry (1709) to execute the decoded instruction according to the opcode,
wherein the execution circuitry (1709) is to treat FP8 data elements of the packed data source operands being denormals as zero.

2. The apparatus of claim 1, wherein the field for the identification of the first source operand is to identify a vector register.

3. The apparatus of claim 1, wherein the field for the identification of the first source operand is to identify a memory location.

4. The apparatus of any of claims 1-3, wherein when the comparison indicates that one of the data elements is not-a-number, the zero flag, the parity flag, and the carry flag of the flags register are set to 1.

5. The apparatus of any of claims 1-3, wherein when the comparison indicates the data element of the first source is greater than the data element of the second source, the zero flag, the parity flag, and the carry flag of the flags register are set to 0.

6. The apparatus of any of claims 1-3, wherein when the comparison indicates the data element of the first source is less than the data element of the second source, the zero flag of the flags register is set to 0, the parity flag of the flags register is set to 0, and the carry flag of the flags register is set to 1.

7. The apparatus of any of claims 1-3, wherein when the comparison indicates the data element of the first source is equal to the data element of the second source, the carry flag of the flags register is set to 0, the parity flag of the flags register is set to 0, and the zero flag of the flags register is set to 1.

8. A method comprising:
decoding an instance of a single instruction (1505), the single instruction to include fields for an opcode, an identification of a location of a first packed data source operand, and an identification of a location of a second packed data source operand, wherein the opcode is to indicate that execution circuitry is to perform, for a particular data element position of the packed data source operands, a comparison of a FP8 data element at that position, update a zero flag, a parity flag, and a carry flag of a flags register based on the comparison, and set an overflow flag, a sign flag, and an adjust flag of the flags register to zero; and
executing the decoded instruction according to the opcode (1509),
wherein FP8 data elements of the packed data source operands being denormals are treated as zero.

9. The method of claim 8, wherein the field for the identification of the first source operand is to identify a vector register.

10. The method of claim 8, wherein the field for the identification of the first source operand is to identify a memory location.

11. The method of any of claims 8-10, wherein when the comparison indicates that one of the data elements is not-a-number, the zero flag, the parity flag, and the carry flag of the flags register are set to 1.

12. The method of any of claims 8-10, wherein when the comparison indicates the data element of the first source is greater than the data element of the second source, the zero flag, the parity flag, and the carry flag of the flags register are set to 0.

13. The method of any of claims 8-10, wherein when the comparison indicates the data element of the first source is less than the data element of the second source, the zero flag of the flags register is set to 0, the parity flag of the flags register is set to 0, and the carry flag of the flags register is set to 1.

14. The method of any of claims 8-13, further comprising:
translating the single instruction into one or more instructions of a different instruction set architecture (1503), wherein the executing the decoded instruction according to the opcode (1509) is the execution of the one or more instructions of the different instruction set architecture.

15. Machine-readable storage including machine-readable instructions, which when executed by an apparatus of any of claims 1-7 implement the method of any of claims 8-14.

## Patentansprüche

1. Einrichtung, die Folgendes umfasst:
eine Decodierschaltungsanordnung (1705) zum Decodieren einer Instanz einer einzelnen Anweisung, wobei die einzelne Anweisung Felder für einen Opcode, eine Identifizierung einer Stelle eines ersten Quellenoperanden für gepackte Daten und eine Identifizierung einer Stelle eines zweiten Quellenoperanden für gepackte Daten aufweisen soll, wobei der Opcode angeben soll, dass eine Ausführungsschaltungsanordnung für eine bestimmte Datenelementposition der Quellenoperanden für gepackte Daten einen Vergleich eines FP8-Datenelements an dieser Position durchführen, ein Zero-Flag, ein Parity-Flag und ein Carry-Flag eines Flag-Registers basierend auf dem Vergleich aktualisieren und ein Overflow-Flag, ein Sign-Flag und ein Adjust-Flag des Flag-Registers auf Null setzen soll; und
die Ausführungsschaltungsanordnung (1709) zum Ausführen der decodierten Anweisung gemäß dem Opcode,
wobei die Ausführungsschaltungsanordnung (1709) FP8-Datenelemente der Quellenoperanden für gepackte Daten, die denormal sind, als Null behandeln soll.

2. Einrichtung nach Anspruch 1, wobei das Feld zur Identifizierung des ersten Quellenoperanden ein Vektorregister identifizieren soll.

3. Einrichtung nach Anspruch 1, wobei das Feld zur Identifizierung des ersten Quellenoperanden einen Speicherort identifizieren soll.

4. Einrichtung nach einem der Ansprüche 1-3, wobei, wenn der Vergleich angibt, dass eines der Datenelemente keine Zahl ist, das Zero-Flag, das Parity-Flag und das Carry-Flag des Flag-Registers auf 1 gesetzt werden.

5. Einrichtung nach einem der Ansprüche 1-3, wobei, wenn der Vergleich angibt, dass das Datenelement der ersten Quelle größer als das Datenelement der zweiten Quelle ist, das Zero-Flag, das Parity-Flag und das Carry-Flag des Flag-Registers auf 0 gesetzt werden.

6. Einrichtung nach einem der Ansprüche 1-3, wobei, wenn der Vergleich angibt, dass das Datenelement der ersten Quelle kleiner als das Datenelement der zweiten Quelle ist, das Zero-Flag des Flag-Registers auf 0 gesetzt wird, das Parity-Flag des Flag-Registers auf 0 gesetzt wird und das Carry-Flag des Flag-Registers auf 1 gesetzt wird.

7. Einrichtung nach einem der Ansprüche 1-3, wobei, wenn der Vergleich angibt, dass das Datenelement der ersten Quelle gleich dem Datenelement der zweiten Quelle ist, das Carry-Flag des Flag-Registers auf 0 gesetzt wird, das Parity-Flag des Flag-Registers auf 0 gesetzt wird und das Zero-Flag des Flag-Registers auf 1 gesetzt wird.

8. Verfahren, das Folgendes umfasst:
Decodieren einer Instanz einer einzelnen Anweisung (1505), wobei die einzelne Anweisung Felder für einen Opcode, eine Identifizierung einer Stelle eines ersten Quellenoperanden für gepackte Daten und eine Identifizierung einer Stelle eines zweiten Quellenoperanden für gepackte Daten aufweisen soll, wobei der Opcode angeben soll, dass eine Ausführungsschaltungsanordnung für eine bestimmte Datenelementposition der Quellenoperanden für gepackte Daten einen Vergleich eines FP8-Datenelements an dieser Position durchführen, ein Zero-Flag, ein Parity-Flag und ein Carry-Flag eines Flag-Registers basierend auf dem Vergleich aktualisieren und ein Overflow-Flag, ein Sign-Flag und ein Adjust-Flag des Flag-Registers auf Null setzen soll; und
Ausführen der decodierten Anweisung gemäß dem Opcode (1509),
wobei FP8-Datenelemente der Quellenoperanden für gepackte Daten, die denormal sind, als Null behandelt werden.

9. Verfahren nach Anspruch 8, wobei das Feld zur Identifizierung des ersten Quellenoperanden ein Vektorregister identifizieren soll.

10. Verfahren nach Anspruch 8, wobei das Feld zur Identifizierung des ersten Quellenoperanden einen Speicherort identifizieren soll.

11. Verfahren nach einem der Ansprüche 8-10, wobei, wenn der Vergleich angibt, dass eines der Datenelemente keine Zahl ist, das Zero-Flag, das Parity-Flag und das Carry-Flag des Flag-Registers auf 1 gesetzt werden.

12. Verfahren nach einem der Ansprüche 8-10, wobei, wenn der Vergleich angibt, dass das Datenelement der ersten Quelle größer als das Datenelement der zweiten Quelle ist, das Zero-Flag, das Parity-Flag und das Carry-Flag des Flag-Registers auf 0 gesetzt werden.

13. Verfahren nach einem der Ansprüche 8-10, wobei, wenn der Vergleich angibt, dass das Datenelement der ersten Quelle kleiner als das Datenelement der zweiten Quelle ist, das Zero-Flag des Flag-Registers auf 0 gesetzt wird, das Parity-Flag des Flag-Registers auf 0 gesetzt wird und das Carry-Flag des Flag-Registers auf 1 gesetzt wird.

14. Verfahren nach einem der Ansprüche 8-13, das ferner Folgendes umfasst:
Übersetzen der einzelnen Anweisung in eine oder mehrere Anweisungen einer anderen Befehlssatzarchitektur (1503),
wobei das Ausführen der decodierten Anweisung gemäß dem Opcode (1509) die Ausführung der einen oder der mehreren Anweisungen der anderen Befehlssatzarchitektur darstellt.

15. Maschinenlesbare Speicherung, einschließlich maschinenlesbarer Anweisungen, die, wenn sie durch eine Einrichtung nach einem der Ansprüche 1-7 ausgeführt werden, das Verfahren nach einem der Ansprüche 8-14 implementieren.

## Revendications

1. Appareil, comprenant :
une circuiterie de décodage (1705) destinée à décoder une instance d'une instruction unique, l'instruction unique devant inclure des champs pour un code d'opération, une identification d'un emplacement d'un opérande d'une première source de données condensées, et une identification d'un emplacement d'un opérande d'une seconde source de données condensées, dans lequel le code d'opération doit indiquer qu'une circuiterie d'exécution doit réaliser, pour une position particulière d'élément de données des opérandes de la source de données condensées, une comparaison d'un élément de données FP8 à cette position, mettre à jour un indicateur zéro, un indicateur de parité, et un indicateur de report d'un registre d'indicateurs sur la base de la comparaison, et régler un indicateur de dépassement, un indicateur de signe, et un indicateur d'ajustement du registre d'indicateurs à zéro ; et
la circuiterie d'exécution (1709) devant exécuter l'instruction décodée selon le code d'opération,
dans lequel la circuiterie d'exécution (1709) doit traiter des éléments de données FP8 des opérandes de la source de données condensées, qui sont des dénormaux, comme zéro.

2. Appareil de la revendication 1, dans lequel le champ pour l'identification de l'opérande de la première source doit identifier un registre vectoriel.

3. Appareil de la revendication 1, dans lequel le champ pour l'identification de l'opérande de la première source doit identifier un emplacement de mémoire.

4. Appareil de quelconques des revendications 1 à 3, dans lequel, lorsque la comparaison indique qu'un des éléments de données est non-un-nombre, l'indicateur zéro, l'indicateur de parité, et l'indicateur de report du registre d'indicateurs sont réglés à 1.

5. Appareil de quelconques des revendications 1 à 3, dans lequel, lorsque la comparaison indique que l'élément de données de la première source est supérieur à l'élément de données de la seconde source, l'indicateur zéro, l'indicateur de parité, et l'indicateur de report du registre d'indicateurs sont réglés à 0.

6. Appareil de quelconques des revendications 1 à 3, dans lequel, lorsque la comparaison indique que l'élément de données de la première source est inférieur à l'élément de données de la seconde source, l'indicateur zéro du registre d'indicateurs est réglé à 0, l'indicateur de parité du registre d'indicateurs est réglé à 0, et l'indicateur de report du registre d'indicateurs est réglé à 1.

7. Appareil de quelconques des revendications 1 à 3, dans lequel, lorsque la comparaison indique que l'élément de données de la première source est égal à l'élément de données de la seconde source, l'indicateur de report du registre d'indicateurs est réglé à 0, l'indicateur de parité du registre d'indicateurs est réglé à 0, et l'indicateur zéro du registre d'indicateurs est réglé à 1.

8. Procédé, comprenant :
le décodage d'une instance d'une instruction unique (1505), l'instruction unique devant inclure des champs pour un code d'opération, une identification d'un emplacement d'un opérande d'une première source de données condensées, et une identification d'un emplacement d'un opérande d'une seconde source de données condensées, dans lequel le code d'opération doit indiquer qu'une circuiterie d'exécution doit réaliser, pour une position particulière d'élément de données des opérandes de la source de données condensées, une comparaison d'un élément de données FP8 à cette position, mettre à jour un indicateur zéro, un indicateur de parité, et un indicateur de report d'un registre d'indicateurs sur la base de la comparaison, et régler un indicateur de dépassement, un indicateur de signe, et un indicateur d'ajustement du registre d'indicateurs à zéro ; et
l'exécution de l'instruction décodée selon le code d'opération (1509),
dans lequel des éléments de données FP8 des opérandes de la source de données condensées, qui sont des dénormaux, sont traités comme zéro.

9. Procédé de la revendication 8, dans lequel le champ pour l'identification de l'opérande de la première source doit identifier un registre vectoriel.

10. Procédé de la revendication 8, dans lequel le champ pour l'identification de l'opérande de la première source doit identifier un emplacement de mémoire.

11. Procédé de quelconques des revendications 8 à 10, dans lequel, lorsque la comparaison indique qu'un des éléments de données est non-un-nombre, l'indicateur zéro, l'indicateur de parité, et l'indicateur de report du registre d'indicateurs sont réglés à 1.

12. Procédé de quelconques des revendications 8 à 10, dans lequel, lorsque la comparaison indique que l'élément de données de la première source est supérieur à l'élément de données de la seconde source, l'indicateur zéro, l'indicateur de parité, et l'indicateur de report du registre d'indicateurs sont réglés à 0.

13. Procédé de quelconques des revendications 8 à 10, dans lequel, lorsque la comparaison indique que l'élément de données de la première source est inférieur à l'élément de données de la seconde source, l'indicateur zéro du registre d'indicateurs est réglé à 0, l'indicateur de parité du registre d'indicateurs est réglé à 0, et l'indicateur de report du registre d'indicateurs est réglé à 1.

14. Procédé de quelconques des revendications 8 à 13, comprenant en outre :
la traduction de l'instruction unique en une ou plusieurs instructions d'une architecture d'ensemble d'instructions différente (1503), dans lequel l'exécution de l'instruction décodée selon le code d'opération (1509) est l'exécution de l'une ou des plusieurs instructions de l'architecture d'ensemble d'instructions différente.

15. Stockage lisible par machine incluant des instructions lisibles par machine, qui, lorsqu'elles sont exécutées par un appareil de quelconques des revendications 1 à 7, mettent en œuvre le procédé de quelconques des revendications 8 à 14.
